# EUROPÄISCHE PATENTSCHRIFT

(11) **EP 1 759 176 B1**
(45) Veröffentlichungstag und Bekanntmachung des Hinweises auf die Patenterteilung: **13.03.2013**
(21) Anmeldenummer: 05754711.9
(22) Anmeldetag: 16.06.2005
(51) Int. Cl.: F16K 15/02, F16K 37/00, G01F 1/26

(54) **STRÖMUNGSSENSOR**
FLOW SENSOR
CAPTEUR DE DEBIT

(30) Priorität: 16.06.2004 DE 102004028759; 28.08.2004 DE 102004013488; 09.02.2005 DE 102005005996
(43) Veröffentlichungstag der Anmeldung: 07.03.2007
(60) Teilanmeldung: 09177162.6
(73) Patentinhaber: ifm electronic gmbh, 45128 Essen (DE)
(72) Erfinder: BUCK, Robert, 88142 Wasserburg (DE); SCHOCKER, Berthold, 88069 Tettnang (DE); BUHL, Peter, 88069 Tettnang (DE)
(74) Vertreter: Gesthuysen, Hans Dieter
(86) Internationale Anmeldenummer: PCT/EP2005/006470
(87) Internationale Veröffentlichungsnummer: WO 2005/124291

(56) Entgegenhaltungen:
- EP-A- 0 625 790
- DE-C1- 19 620 699
- DE-U1- 29 823 702
- FR-A- 2 777 081
- GB-A- 2 151 383
- US-A- 5 115 684
- US-A1- 2004 045 368

## Beschreibung

Die Erfindung betrifft einen Strömungssensor, für strömende Medien gemäß dem Oberbegriff des Patentanspruchs 1. Ein derartiger Strömungssensor weist ein zylindrisches Gehäuse, ein im Gehäuse angeordnetes Sensorelement und einen in das strömende Medium hineinragenden Hubkörper auf.

Eingangs ist gesagt worden, daß die Erfindung einen Strömungssensor betrifft. Ein derartiger Strömungssensor kann auch als Strömungswächter oder als Strömungsmeßgerät bezeichnet werden. Daneben wird für derartige Strömungssensoren teilweise auch der Begriff Durchflußsensor bzw. Durchflußwächter verwendet. Im Rahmen der Erfindung wird unter einem Strömungssensor sowohl ein Strömungswächter bzw. Durchflußwächter verstanden, mit dem lediglich das Vorhandensein oder Nicht-Vorhandensein einer bestimmten Strömung festgestellt wird, als auch ein Strömungsmeßgerät bzw. Durchflußmeßgerät, bei dem ein Strömungswert gemessen wird; bei dem also ein dem Strömungswert entsprechender Meßwert gewonnen werden kann.

Bekannte Strömungswächter bzw. Strömungsmeßgeräte arbeiten häufig nach dem kalorimetrischen Prinzip. Dazu weisen die Strömungssensoren in der Regel mindestens ein Temperaturmeßelement und ein Heizelement auf. Im allgemeinen arbeitet man mit einer Differenztemperatunnessung. Ein erstes Temperaturmeßelement mißt die eigentliche Meßtemperatur, wobei sich die Meßtemperatur aus der Heizleistung des Heizelements, der Temperatur des strömenden Mediums und der strömungsabhängigen Wärmetransportkapazität des strömenden Mediums ergibt. Weiter mißt im allgemeinen ein zweites Temperaturmeßelement eine Referenztemperatur, wobei jedoch die Funktion des zweiten Temperaturmeßelements auch von dem Heizelement übernommen werden kann. Bei einem Strömungssensor nach dem kalorimetrischen Prinzip stellen das Temperaturmeßelement und das Heizelement das bzw. die eingangs genannten Sensorelemente dar. Derartige Strömungssensoren sind - insbesondere im Vergleich zu herkömmlichen Näherungsschaltern - relativ teuer.

Sensoren, die zur Überwachung eines Mediums bzw. der Eigenschaft eines Mediums, wie z. B. des Druckes einer Flüssigkeit oder eines Gases, dienen, insbesondere Strömungssensoren, weisen meist ein zylindrisches Gehäuse auf, wobei das Gehäuse zum einen, wie bei allen Sensoren, zum Schutz des Sensors und der dazu gehörenden Elektronik, zum anderen aber auch zum sicheren und dauerhaften Anschluß an das das Medium führende Rohr bzw. den Behälter dient.

Die Sensoren sind entweder zum Anschluß an separate Auswerteelektroniken vorgesehen, oder mit der Auswerteelektronik als kompakte Einheit zusammengefaßt. Insbesondere derartige Kompaktgeräte, bestehen meist aus mindestens zwei Teilen, einem Unterteil und einem Oberteil, wobei das Unterteil mit dem das Medium führenden Behälter oder Rohr verbunden ist und deshalb häufig auch als Prozeßanschluß bezeichnet wird. Dazu kann das Gehäuse entweder direkt in ein entsprechend ausgebildetes Rohrstück - T-Stück oder Prozeßanschluß - eingeschraubt, oder zusammen mit einem speziellen Anschlußstück als komplette Baueinheit mit dem Leitungssystem einer Maschine oder eines Behälters, durch das das zu überwachende Medium fließt, verbunden werden.

Strömungssensoren können bei einer Vielzahl von Anwendungsfällen eingesetzt werden. Beispielsweise können Strömungssensoren in verfahrenstechnischen Anlagen und bei Werkzeugmaschinen eingesetzt werden. In beiden Fällen dienen Strömungssensoren dazu, die Strömung bzw. die Strömungsgeschwindigkeit eines bestimmten Mediums, beispielsweise Luft, Wasser, Öl oder Kühlschmiermittel, zu messen bzw. zu überwachen.

Nachteilig bei den zuvor beschriebenen Sensoren, insbesondere bei einem Strömungssensor, ist es - unabhängig davon, ob das Gehäuse ein- oder zweiteilig ausgeführt ist -, daß zum Anschluß des Sensors bzw. des Prozeßanschlusses des Sensors in bestehenden Anlagen eine Rohrleitung aufgetrennt und ein T-Stück zur Aufnahme des Sensors eingebaut werden muß. Diese Vorgehensweise ist dann besonders nachteilig, wenn die Verwendung eines Strömungssensors nur mit relativ geringen Kosten verbunden sein soll. Dies ist beispielsweise bei der Wasserversorgung in einem Ein- oder Mehrfamilienhaus der Fall. Eine zentrale Wasserversorgungsanlage in einem Ein- oder Mehrfamilienhaus besteht in der Regel aus einem Warmwasserkreislauf, mit einem Warmwasserspeicher, einem Kaltwasserzulauf und einer Warm- und Kaltwasserleitung mit mehreren Zapfstellen (z. B. in den Bädern, der Küche und den Toiletten).

Aus der GB 2 151 383 A ist einen Strömungswächter für strömende Medien bekannt, bei dem innerhalb eines Leitungsstückes ein mit einem magnetischen Stab verbundenes bewegliches Ventil derart angeordnet ist, daß das Ventil seine Position innerhalb des Leitungsstücke in Abhängigkeit von der Strömung des Mediums ändert. An der Außenseite des Leitungsstückes ist ein Gehäuse angeordnet, in dem sich ein Reed-Kontakt befindet, der in Abhängigkeit von der Position des magnetischen Stabes seinen Schaltzustand ändert, d.h. der Reed-Kontakt wird geöffnet oder geschlossen.

Der vorliegenden Erfindung liegt daher die Aufgabe zugrunde, ein eingangs beschriebenen Strömungssensor zur Verfügung zu stellen, welcher möglichst kostengünstig hergestellt werden kann. Darüber hinaus soll der Strömungssensor eine möglichst hohe Meßgenauigkeit aufweisen. Gemäß einer weiteren Aufgabe der vorliegenden Erfindung soll der Strömungssensor darüber hinaus besonders einfach in eine bestehende Anlage, beispielsweise in eine Wasserversorgungsanlage eines Ein- oder Mehrfamilienhauses, integriert werden können. ;

Die zuvor genannte Aufgabe ist bei dem eingangs beschriebenen Strömungssensor mit den Merkmalen des Patentanspruchs 1 dadurch gelöst, daß ein in das strömende Medium hineinragender Hubkörper vorgesehen ist, wobei der Hubkörper an dem Gehäuse beweglich geführt ist und in Abhängigkeit von der Strömung des zu überwachenden! Mediums gegen die Rückstellkraft eines zwischen dem Gehäuse und dem Hubkörper angeordneten Rückstellelements bewegbar ist, daß das Sensorelement als berührungsloser Näherungsschalter ausgebildet ist und ein von der Position des Hubkörpers abhängiges Signal erzeugt, und daß das zum Hubkörper weisende Ende des Gehäuses einen Führungsbolzen aufweist und zumindest das - im eingebauten Zustand - aus dem Inneren des Rohres weisenden Ende des Hubkörpers hülsenförmig ausgebildet ist, wobei der Innendurchmesser des hülsenförmige Teils des Hubkörper größer als der Außendurchmesser des Führungsbolzen ist, so daß der Hubkörper auf dem Führungsbolzens geführt ist.

Durch die Anordnung des in das strömende Medium hineinragenden, beweglich am Gehäuse geführten Hubkörpers, dessen Position ein Maß für die zu überwachende Strömung darstellt, kann ein sehr einfacher Strömungssensor realisiert werden. Das Sensorelement ist dabei durch einen in dem Gehäuse angeordneten berührungslosen Näherungsschalter realisiert sein, der ein von der Position des Hubkörpers abhängiges Signal abgibt.

Wie eingangs bereits ausgeführt worden ist, kann mit dem erfindungsgemäßen Strömungssensor sowohl lediglich das Vorhandensein oder Nicht-Vorhandensein einer bestimmten Strömung festgestellt als auch ein Strömungswert gemessen werden; d. h. ein dem Strömungswert entsprechender Meßwert gewonnen werden. Somit handelt es sich bei dem berührungslosen Näherungsschalter nicht um einen binären Schalter im klassischen Sinn, sondern um einen berührungslosen "Näherungssensor", der zunächst ein von der Position des Hubkörpers abhängiges analoges Signal erzeugt, welches entsprechend der Ausgestaltung des Sensorelements in ein klassisches - binäres - Schaltsignal oder ein analoges bzw. digitales Ausgangssignal umgewandelt wird.

Je nachdem, ob der erfindungsgemäße Strömungssensor als Strömungsmeßgerät einen dem Strömungswert entsprechenden analogen Meßwert oder als Strömungswächter ein binäres Schaltsignal ausgeben soll, wird das von dem Näherungsschalter erzeugte Signal in einer nachfolgenden Bearbeitungseinheit in ein binäres, analoges oder digitales Ausgangssignal umgewandelt. Die Bearbeitungseinheit kann dabei im Falle eines Strömungsmeßgeräts insbesondere einen Mikroprozessor und im Falle eines Strömungswächters insbesondere einen Schwellwertschalter aufweisen.

Soll der erfindungsgemäße Strömungssensor als Strömungswächter ein binäres Schaltsignal ausgeben, so wird vorzugsweise ein Näherungsschalter mit einer geringen Hysterese und/oder einer hohen Schaltgenauigkeit eingesetzt, so daß eine hohe Meßgenauigkeit des Strömungssensors erreicht werden kann. Die geringe Hysterese sorgt dabei dafür, daß der Einschaltpunkt und der Ausschaltpunkt eines als Schalter ausgebildeten Strömungssensors sehr eng zusammen liegen, so daß nur ein geringer Unterschied in der Position des Hubkörpers und damit in der Strömung des zu überwachenden Mediums zwischen dem Einschaltpunkt und dem Ausschaltpunkt besteht.

Das Rückstellelement, das zwischen dem Gehäuse und dem Hubkörper angeordnet ist, kann als mechanisches magnetisches oder elektromagnetisches Rückstellelement ausgebildet sein. Im einfachsten Fall wird dabei ein Federelement verwendet, gegen dessen Federkraft der Hubkörper durch die Strömung des Mediums ausgelenkt wird. Daneben kann für bestimmte Anwendungsfälle jedoch auch eine Magnet-Magnetanordnung oder eine Magnet-Spulenanordnung als Rückstellelement eingesetzt werden. Hierbei weist der Hubkörper mindestens einem Magneten auf, der mit mindestens einem im Gehäuse angeordneten Gegenmagneten oder mit einer im Gehäuse angeordneten Spule zusammenwirkt, Als Rückstellkraft wirkt dann die zwischen den Magneten oder zwischen dem Magneten und der Spule existierenden magnetischen Abstoßungskraft.

Gemäß einer besonders vorteilhaften Ausgestaltung des erfindungsgemäßen Strömungssensors weist der Hubkörper einen umlaufenden Bund auf, wobei der Bund so ausgebildet ist, daß der Strömungssensor zusätzlich die Funktion eines Rückschlagventils aufweist. Dadurch kann der erfindungsgemäße Strömungssensor einfach anstelle eines in einer Wasserversorgungsanlage vorhandenen Rückschlagventils in den für das Rückschlagventil bereits vorgesehenen Anschlußstutzen eines Rohres, insbesondere des Kaltwasserzulaufs, eingeschraubt werden. Damit entfällt das bei der Verwendung von kalorimetrischen Strömungssensoren notwendige Einfügen eines T-Stückes in die bestehende Rohrleitung zum Anschluß des Strömungssensors. Da der Strömungssensor gleichzeitig auch als Rückschlagventil dient, sind keine Änderungen in den Rohrleitungen erforderlich; der Strömungssensor ersetzt einfach das Rückschlagventil und liefert darüber hinaus noch eine Aussage über die Strömung des Mediums, d. h. des Wassers, in der Leitung.

Um auch bei relativ kleinen Strömungen einen ausreichend großen Hub des Hubkörpers zu erreichen, der dann auch mit einem einfachen berührungslosen Näherungsschalter detektiert werden kann, ist vorzugsweise vorgesehen, daß zwischen dem - im eingebauten Zustand - in das Rohr ragenden Ende des Hubkörpers und dem umlaufenden Bund ein zylindrischer Abschnitt am Hubkörper ausgebildet ist. Dadurch wird erreicht, daß das in das Rohr ragende Ende des Hubkörpers - im Unterschied zu einem normalen Rückschlagventil - nicht als flacher Teller ausgebildet ist. Durch die Ausbildung eines zylindrischen Abschnittes, der im eingebauten Zustand des Strömungssensors in den Ventilsitz im Rohr hineinragt, wird bereits bei sehr geringen Strömungen ein ausreichend großer Hub des Hubkörpers erreicht.

Alternativ zu einem zylindrischen Abschnitt kann auch ein Abschnitt mit einer geringen Konizität von 0,5° bis 15°, vorzugsweise von 1° bis 10° am Hubkörper ausgebildet sein. In diesem Fall kann dann der umlaufende Bund entfallen. Der Vorteil eines Abschnitts mit einer geringen Konizität besteht darin, daß Toleranzen im Durchmesser der Leitungsabschnitts, in den der Hubkörper hineinragt, beispielsweise des Ventilsitzes, durch den konischen Bereich ausgeglichen werden können. Dadurch ist gewährleistet, daß für einen Solldurchmesser des Leitungsabschnitts auch stets ein Strömungssensor mit einem entsprechenden Hubkörperdurchmesser eingesetzt werden kann.

Gemäß einer ersten vorteilhaften Ausgestaltung des erfindungsgemäßen Strömungssensors wird als Sensorelement ein magnetischer Näherungsschalter verwendet, wobei im Hubkörper ein Permanentmagnet angeordnet ist. Wird der Hubkörper aufgrund einer vorliegenden Strömung des zu überwachenden Mediums in Richtung des Gehäuses bewegt, so führt dies zu einer Verringerung des Abstandes zwischen dem magnetischen Näherungsschalter und dem Permanentmagnet, was bei einem vorgegebenen Abstand ein Schaltsignal des Strömungssensors auslösen kann. Anstelle eines binären Schaltsignals kann der Strömungssensor auch ein zum Abstand des Hubkörpers und damit zur Strömung proportionales Signal, insbesondere eine Analogsignal, ausgeben. Hierfür ist es wesentlich, daß der magnetische Näherungsschalter selber zunächst ein analoges Signal und nicht bloß ein binäres Schaltsignal abgibt. Ein Reed-Kontakt als Magnetschalter ist somit als magnetischer Näherungsschalter nicht geeignet.

Der Vorteil bei der Verwendung eines magnetischen Näherungsschalters als Sensorelement besteht darin, daß derartige magnetische Näherungsschalter auch bei einem relativ kleinen Durchmesser einen ausreichend großen Schaltabstand aufweisen, so daß der Hubkörper einen entsprechend großen Hub zurücklegen kann. Als magnetischer Näherungsschalter eignet sich daher insbesondere eine GMR-Zelle (Giant Magneto Resistor). Eine derartige GMR-Zelle hat nicht nur den Vorteil eines relativ großen Schaltabstandes, so daß ein Strömungssensor mit einem ausreichend großen Hub realisierbar ist, sondern sie eignet sich auch besonders gut zur Realisierung eines analogen Strömungssensors. Dabei wird der Umstand ausgewertet, daß sich das Signal der GMR-Zelle in Abhängigkeit vom Abstand des Permanentmagneten und damit in Abhängigkeit vom Abstand des Hubkörpers ändert. Bei einer entsprechenden Dimensionierung des Hubkörpers, insbesondere mit einer entsprechenden konisch oder kegelstumpfförmig zulaufenden Spitze, ist dabei das analoges Ausgangssignal des magnetischer Näherungsschalters im wesentlichen linear proportional zur Strömung des zu überwachenden Mediums.

Gemäß einer alternativen Ausgestaltung des erfindungsgemäßen Strömungssensors wird als Sensorelement ein induktiver Näherungsschalter verwendet, insbesondere ein nichtbündig einbaubarer induktiver Näherungsschalter. Derartige induktive Näherungsschalter werden seit Jahrzehnten millionenfach im industriellen Bereich eingesetzt, so daß je nach konkretem Anwendungsfall eine Vielzahl unterschiedlicher induktiver Näherungsschalter, mit unterschiedlichen Durchmessern und unterschiedlichen Schaltabständen zur Verfügung stehen. Ein nichtbündig einbaubarer induktiver Näherungsschalter weist im Unterschied zu einem bündigen bzw. bündig einbaubaren Näherungsschalter auch ein seitliches Streufeld auf, da der vordere sensitive Bereich des Näherungsschalters kein Metallgehäuse aufweist, so daß nicht nur frontal sondern auch seitlich an den Näherungsschalter angenäherte Objekte erkannt werden können. Bei einem nichtbündig einbaubaren induktiven Näherungsschalter reicht ein Metallgehäuse - sofern der Näherungsschalter ein Metallgehäuse aufweist - nur bis zum Sensorkopf, d. h. bis zur Spule bzw. bis zum Schalenkern des Näherungsschalters.

Damit auch ein induktiver Näherungsschalter bei einem möglichst geringen Durchmesser eine großen Schaltabstand aufweist, ist vorzugsweise vorgesehen, daß der Sensorkopf des induktiven Näherungsschalter neben einer Spule einen Schalenkern, insbesondere aus Ferrit aufweist, in dem die Spule eingelegt ist. Derartige Schalenkerne sind bei induktiven Näherungsschalter seit langem bekannt und dienen dazu, die räumliche Verteilung der Feldlinien des elektromagnetische Feld des Sensorkopfes in gewünschter Weise zu beeinflussen.

Alternativ dazu kann der Sensorkopf des induktiven Näherungsschalter eine Luftspule aufweisen, wobei in der Luftspule vorzugsweise ein stabförmiger Ferrit- oder Eisenkern angeordnet ist. Durch den stabförmiger Ferrit- oder Eisenkern wird die räumliche Ausbreitung des elektromagnetischen Feld vergrößert. Dadurch wird der sensitive Bereich des induktiven Näherungsschalters vergrößert. Dies ist insbesondere dann vorteilhaft, wenn der Strömungssensor als Analogsensor ausgebildet sein soll, d. h. ein analoges Ausgangssignal ausgibt, da dann der analoge Bereich eine ähnliche Länge wie der stabförmige Ferrit- oder Eisenkern hat. Das analoge Signal hängt dabei vom Bedämpfungsgrad des induktiven Näherungsschalters ab.

Gemäß einer bevorzugten konstruktiven Ausgestaltung des erfindungsgemäßen Strömungssensors ist das zum Hubkörper weisende Ende des Gehäuses als Führungsbolzen und das Ende des Hubkörpers hülsenförmig ausgebildet, so daß der Hubkörper auf dem Führungsbolzen geführt ist. Der hülsenförmige Teil des Hubkörpers besteht dabei vorzugsweise aus Metall, insbesondere aus Edelstahl, so daß er als Betätigungselement für einen induktiver Näherungsschalter dient. Bei einer entsprechenden Annäherung des Endes des Hubkörpers an die Stirnseite des induktiven Näherungsschalters entsteht in der Stirnseite des hülsenförmigen Teils des Hubkörpers ein Kreisstrom, der eine stark bedampfende Wirkung auf das elektromagnetische Feld des Näherungsschalters ausübt. Dieser Effekt ist als Kurzschlußringeffekt bekannt. Da ein nichtbündig einbaubarer induktiver Näherungsschalter auch ein seitliches Streufeld aufweist, bleibt der Näherungsschalter auch bei einer weiteren Annäherung des Hubkörpers weiter bedämpft, da der Näherungsschalter sich fortlaufend innerhalb des hülsenförmige Teil des Hubkörpers befindet. Die Bedämpfung des Näherungsschalters ist dabei proportional zur Eintauchtiefe des Näherungsschalters in den hülsenförmigen Teil des Hubkörpers, so daß auch ein zur Strömung proportionales analoges Ausgangssignal erzeugt werden kann.

Aufgrund der stark bedämpfenden Wirkung der Stirnseite des hülsenförmigen Teils des Hubkörpers kann der hülsenförmige Teil des Hubkörpers sehr dünn ausgebildet sein, so daß der Hubkörper insgesamt ein geringes Gewicht aufweist. Hierdurch ergibt sich nicht nur eine Platz- und Materialersparnis, sondern auch eine verbesserte Dynamik des Strömungssensors. Der hülsenförmigge Teil des Hubkörpers kann beispielsweise eine Wandstärke von nur 1 mm oder weniger aufweisen. Das Verhältnis des Durchmessers des hülsenförmigen Teils des Hubkörpers zum Durchmesser der Spule des induktiven Näherungsschalters kann dabei einen Wert von 2 bis 4, vorzugsweise von 2,5 bis 3,5 haben.

Aufgrund des Kurzschlußringeffekts wäre anstelle eine hülsenförmigen Hubkörpers grundsätzlich auch nur ein ringförmiger Hubkörper zur Bedämpfung ausreichend. In der Praxis kann dies dadurch realisiert sein, daß der hülsenförmige Teil des Hubkörpers aus Kunststoff besteht, wobei in dem hülsenförmige Teil mindestens ein Metallring angeordnet ist. Soll ein analoger Strömungssensor mit einem nichtbündigen induktiven Näherungsschalter realisiert werden, so können mehrere, einen Abstand zueinander aufweisende Metallringe im hülsenförmige Teil des Hubkörpers angeordnet werden. Aufgrund des auch seitlichen Streufeldes des nichtbündigen induktiven Näherungsschalters ist dadurch meßbar, wie viele Metallringe sich innerhalb des Streufeldes des Näherungsschalters befinden, so daß die Bedämpfung des Näherungsschalters proportional zur Eintauchtiefe in den hülsenförmigen Teil des Hubkörpers ist und auch auf dieser Art ein zur Strömung proportionales analoges Ausgangssignal erzeugt werden kann.

Gemäß einer weiteren Ausgestaltung der Erfindung ist der Hubkörper zweiteilig ausgebildet ist; der Hubkörper besteht dann aus einem - im eingebauten Zustand - in das Innere des Rohres ragenden ersten Teil und einem - im eingebauten Zustand - aus dem Inneren des Rohres weisenden zweiten Teil. Die Zweiteiligkeit des Hubkörpers schafft die Möglichkeit, für die beiden Teile des Hubkörpers verschiedene Materialien zu verwenden, so daß der Hubkörper noch besser an die jeweiligen Einsatzbedingungen angepaßt werden kann.

Vorteilhafterweise ist das Sensorelement derart in dem Gehäuse angeordnet, daß der Abstand des Sensorelements zum Hubkörper einstellbar ist. Hierdurch ist ein einfaches Einstellen des Schaltpunktes des Näherungsschalters bei einem als Schalter ausgebildeten Strömungssensors bzw. des Nullpunktes bei einem analogen Strömungssensor möglich. Im einfachsten Fall ist dabei der ein Außengewinde aufweisende Näherungsschalter in dem Gehäuse eingeschraubt, so daß durch eine entsprechende Schraubbewegung der Abstand des Sensorelements zum Hubkörper vergrößert oder verkleinert werden kann. Bei einem analogen Strömungssensor kann dadurch auch der Meßbereich eingestellt werden. Dadurch kann beispielsweise ein Teilbereich des maximal möglichen Meßbereichs ausgewählt werden, der dann mit einer entsprechend höheren Meßgenauigkeit gemessen werden kann.

Gemäß einer komfortableren Alternative der Einstellbarkeit ist an dem dem Hubkörper abgewandten Ende des Gehäuses ein Befestigungsbügel augeschraubt und zwischen dem Ende des Gehäuses und dem Befestigungsbügel eine Verstellmutter angeordnet ist, wobei das Sensorelement ein Außengewinde mit mindestens einer abgeflachten Längsseite aufweist, in dem Befestigungsbügel eine an den Querschnitt des Sensorelements angepaßte Öffnung ausgebildet ist und die Verstellmutter ein zum Außengewinde des Sensorelements korrespondierendes Innengewinde aufweist. Durch Verdrehen der Verstellmutter kann dann die axiale Position des Sensorelements eingestellt werden kann, ohne daß sich das Sensorelement mitdreht. Dies ist insbesondere dann vorteilhaft, wenn das Sensorelement über sein Anschlußkabel bereits elektrisch angeschlossen ist, da dann ein Mitdrehen des Anschlußkabels verhindert wird.

Wie zuvor bereits ausgeführt, kann der erfindungsgemäße Strömungssensor besonders vorteilhaft in einer Wasserversorgungsanlage nach Anspruch 24 in einem Ein- oder Mehrfamilienhaus an der Position eines Rückschlagventils eingesetzt werden. Daher betrifft die Erfindung neben dem zuvor beschriebenen Strömungssensor auch eine Anordnung zur Strömungsüberwachung in einer Wasserversorgungsanlage in einem Ein- oder Mehrfamilienhaus, mit einem erfindungsgemäßen Strömungssensor, wobei die Wasserversorgungsanlage zumindest einen Kaltwasserzulauf, einen Brauchwasserspeicher und einen Warmwasserkreislauf mit einer Warmwasserleitung und mehreren Zapfstellen aufweist, und wobei im Kaltwasserzulauf ein Ventilsitz ausgebildet ist. Erfindungsgemäß ist nun der Strömungssensor im Kaltwasserzulauf anstelle des Rückschlagventils angeordnet. Wie zuvor bereits ausgeführt, entfällt dadurch die nachträgliche Anordnung eines T-Stückes innerhalb einer bestehenden Rohrleitung. An der Stelle des für den Brauchwasserspeicher vorgeschriebenen Rückschlagventils kann einfach der Strömungssensor eingesetzt werden, da dieser die Funktion des Rückschlagventils ebenfalls übernimmt.

Da bei einem Ein- oder Mehrfamilienhaus die Leitungswege zwischen dem in zumeist im Keller angeordneten Warmwasserspeicher und den einzelnen Zapfstellen relativ groß sind, weist die Wasserversorgungsanlage in der Regel eine Zirkulationspumpe und eine Zirkulationsleitung auf. Die Zirkulationsleitung sorgt dabei dafür, daß bei eingeschalteter Zirkulationspumpe permanent warmes Wasser an den Stichleitungen zu den einzelnen Zapfstellen ansteht.

Durch die Verwendung einer Zirkulationspumpe und einer Zirkulationsleitung wird der Komfort bei der Benutzung einer Warmwasserversorgungsanlage deutlich erhöht, da das gewünschte warme Wasser sehr kurzfristig nach dem Öffnen der Zapfstelle zur Verfügung steht. Dieser Vorteil wird jedoch durch den erhöhten Verbrauch an elektrischer Energie für die Zirkulationspumpe und insbesondere durch erhöhte Wärmeverluste in den Warmwasserleitungen erkauft. Um diese Verluste zu verringern, sind verschiedene Maßnahmen bekannt, eine "bedarfsorientierte" Steuerung der Zirkulationspumpe zu realisieren. Die einfachste und in der Praxis am häufigsten angewandte Maßnahme besteht in der Verwendung einer einfachen Zeitschaltuhr, wodurch erreicht wird, daß die Zirkulationspumpe zumindest während der Nacht ausgeschaltet bleibt. Durch die Verwendung des erfindungsgemäßen Strömungssensors kann darüber hinaus eine Steuerung der Zirkulationspumpe realisiert werden, bei der - durch das Schaltsignal des Strömungssensors initiiert - die Zirkulationspumpe nur bei einer Wasserentnahme, d. h. bei einer Strömung in einer Wasserleitung, eingeschaltet wird.

Im einzelnen gibt es nun eine Vielzahl von Möglichkeiten, den erfindungsgemäßen Strömungssensor auszugestalten und weiterzubilden. Dazu wird verwiesen auf die dem Patentanspruchs 1 nachgeordneten Patentansprüche sowie auf die Beschreibung bevorzugter Ausführungsbeispiele in Verbindung mit der Zeichnung. In der Zeichnung zeigen
- Fig. 1: ein erstes Ausführungsbeispiel eines Strömungssensors, eingebaut in einer Wasserleitung einer Wasserversorgungsanlage, bei keiner Strömung,
- Fig. 2: den Strömungssensor gemäß Fig. 1, bei Beginn der Wasserentnahme,
- Fig. 3: den Strömungssensor gemäß Fig. 1, bei voller Wasserentnahme,
- Fig. 4: ein Ausführungsbeispiel eines erfindungsgemäßen Strömungssensors, eingebaut in einer Wasserleitung, bei keiner Wasserentnahme,
- Fig. 5: den Strömungssensor gemäß Fig. 4, bei beginnender Wasserentnahme,
- Fig. 6: den Strömungssensor gemäß Fig. 4, bei voller Wasserentnahme,
- Fig. 7: eine alternative Ausgestaltung eines Strömungssensors gemäß Fig. 1,
- Fig. 8: eine alternative Ausgestaltung eines Strömungssensors gemäß Fig. 4,
- Fig. 9: eine weitere alternative Ausgestaltung eines Strömungssensors gemäß Fig. 4,
- Fig. 10: die beiden Teile eines Hubkörper des Strömungssensors gemäß Fig. 9,
- Fig. 11: ein Ausführungsbeispiel eines erfindungsgemäßen Strömungssensors, mit einem induktiven Näherungsschalter,
- Fig. 12: ein Ausführungsbeispiel eines erfindungsgemäßen Strömungssensors, mit einem magnetischen Näherungsschalter,
- Fig. 13: ein weiteres Ausführungsbeispiel eines erfindungsgemäßen Strömungssensors, mit einem magnetischen Näherungsschalter,
- Fig. 14: ein Ausführungsbeispiel eines erfindungsgemäßen Strömungsensors, mit einem zweiteiligen Gehäuse, ähnlich Fig. 13,
- Fig. 15: zwei Darstellungen einer besonderen Variante des Hubkörpers eines erfindungsgemäßen Strömungssensors,
- Fig. 16: ein erstes Ausführungsbeispiel eines erfindungsgemäßen Strömungssensors, mit einem magnetischen Rückstellelement,
- Fig. 17: ein zweites Ausführungsbeispiel eines erfindungsgemäßen Strömungssensors, mit einem magnetischen Rückstellelement,
- Fig. 18: ein Ausführungsbeispiel eines erfindungsgemäßen Strömungssensors, mit einem magnetischen Näherungsschalter als Sensorelement und einer speziellen Einstellanordnung für den magnetischen Näherungsschalter, und
- Fig. 19: zwei Einzeldarstellungen der Einstellanordnung gemäß Fig. 18.

Die Figuren zeigen verschiedene Ausführungsformen eines Strömungssensors 1, der ein zylindrisches Gehäuse 2 aufweist, wobei an dem Gehäuse 2 ein Abschnitt mit einem Außengewinde 3 ausgebildet ist, mit dem der Strömungssensor 1 in einem Anschlußstutzen 4 eines Rohres 5 eingeschraubt ist

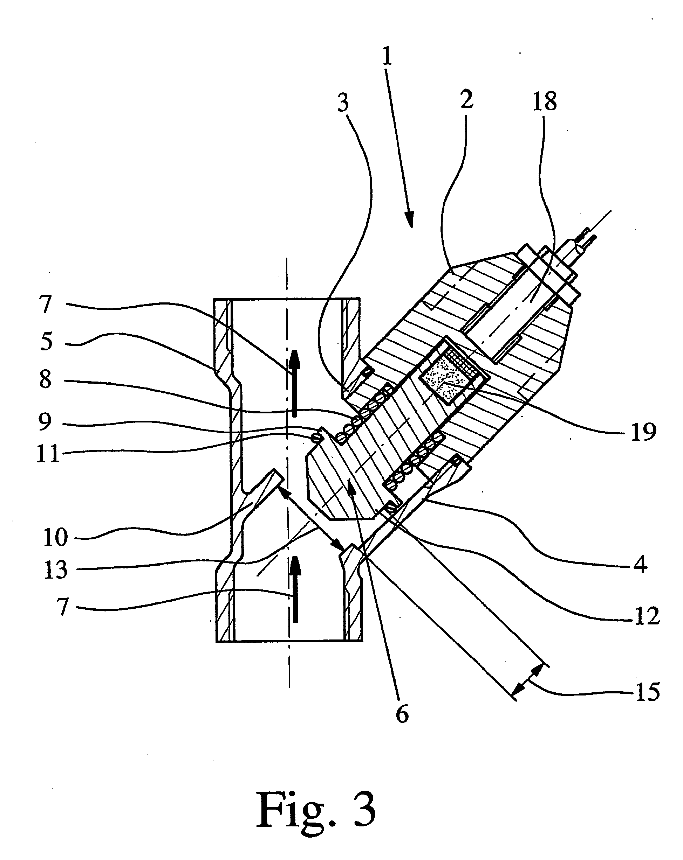

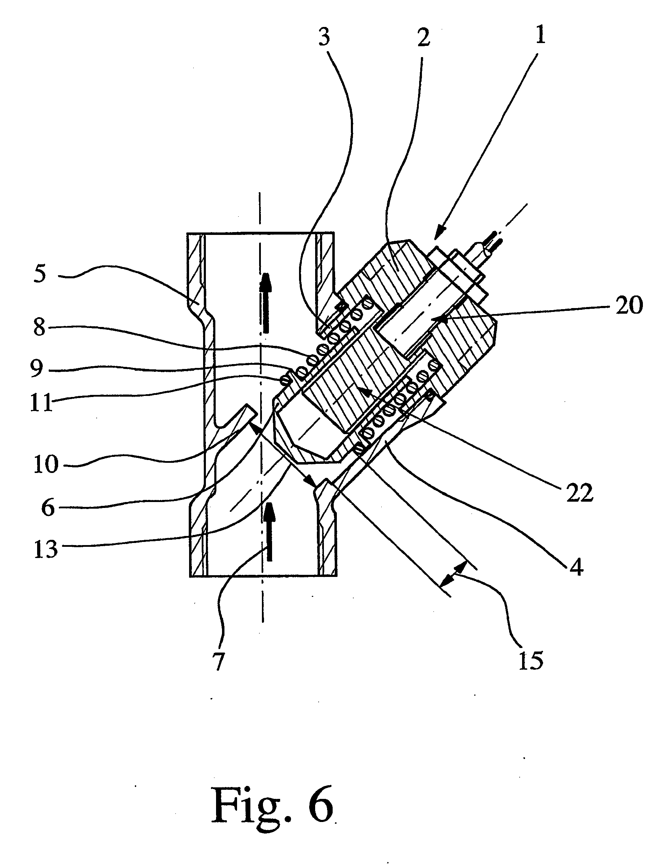

Den in den Figuren dargestellten unterschiedlichen Ausführungsformen des erfindungsgemäßen Strömungssensors 1 ist gemeinsam, daß jeweils ein in das strömende Medium hineinragender Hubkörper 6 vorgesehen ist, der beweglich an dem Gehäuse 2 geführt ist und in Abhängigkeit von der Strömung 7 des zu überwachenden Mediums - in den Figuren 3 und 6 durch einen Pfeil dargestellt - in Richtung des Gehäuses 2 gedrückt wird. Hierbei wird der Hubkörper 6 gegen die Federkraft eines zwischen dem Gehäuse 2 und dem Hubkörper 6 angeordneten Federelements 8 ausgelenkt.

Die Position des Hubkörpers 6, die ein Maß für die Strömung 7 des zu überwachenden Mediums darstellt, wird von einem in dem Gehäuse 2 angeordneten berührungslosen Sensorelement ausgewertet. Im einfachsten Fall wird dabei nur das Vorhandensein oder Nicht-Vorhandensein einer bestimmten Strömung 7 überwacht Daneben ist es jedoch auch möglich, den Strömungssensor 1 so auszubilden, daß der tatsächliche Strömungswert gemessen und als Analog- oder Digitalwert ausgegeben wird.

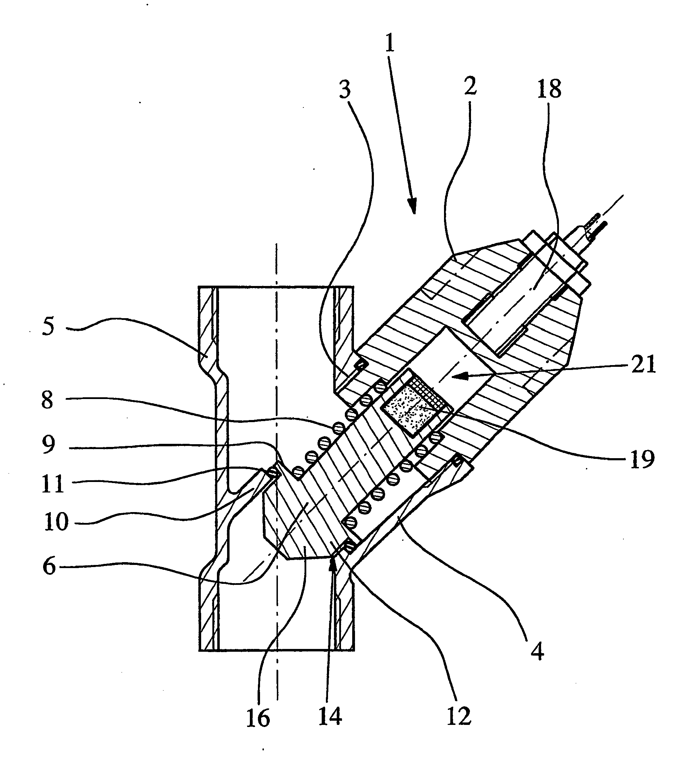

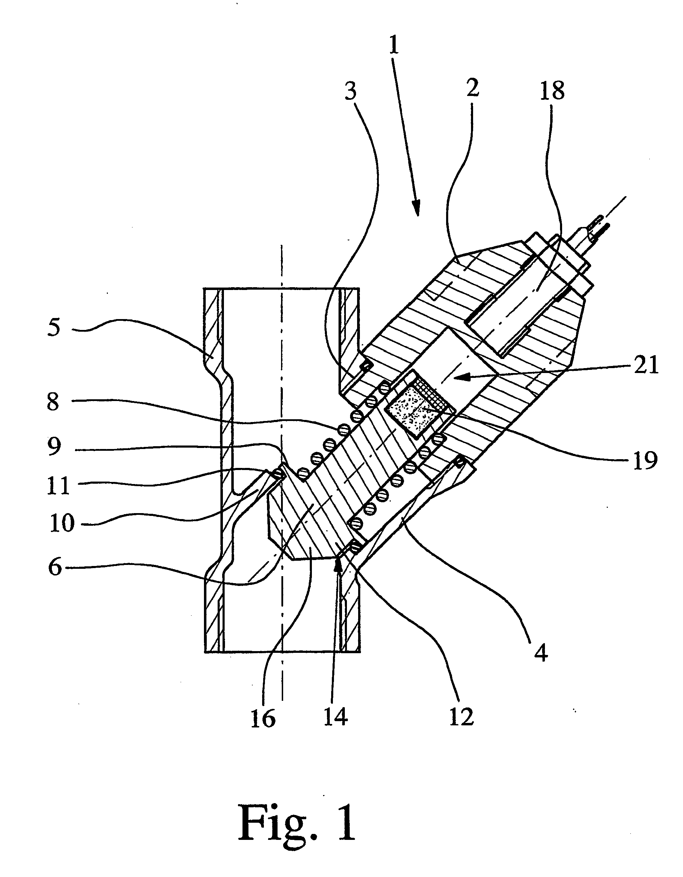

Bei den Ausführungsbeispielen gemäß den Fig. 1 bis 7, 11 bis 15, 17 und 18 ist am Hubkörper 6 ein umlaufender Bund 9 derart ausgebildet, daß der Strömungssensor 1 bei Einbau in einem entsprechenden, einen Ventilsitz 10 aufweisenden, Rohrstück 5, zusätzlich die Funktion eines Rückschlagventils aufweist. Zur Gewährleistung einer ausreichenden Dichtigkeit ist dabei vor dem Bund 9 noch ein Dichtungsring 11 angeordnet. Bei den Ausführungsbeispielen gemäß den Figuren 1 bis 8 beträgt der Winkel α zwischen der Längsachse des Hubkörpers 6 bzw. der Längsachse des Ventilsitzes 10 und der Längsachse des Rohres 5 ca. 45°, wodurch eine verbesserte Empfindlichkeit des Strömungssensors 1 als bei einem Winkel von 90° erreicht wird.

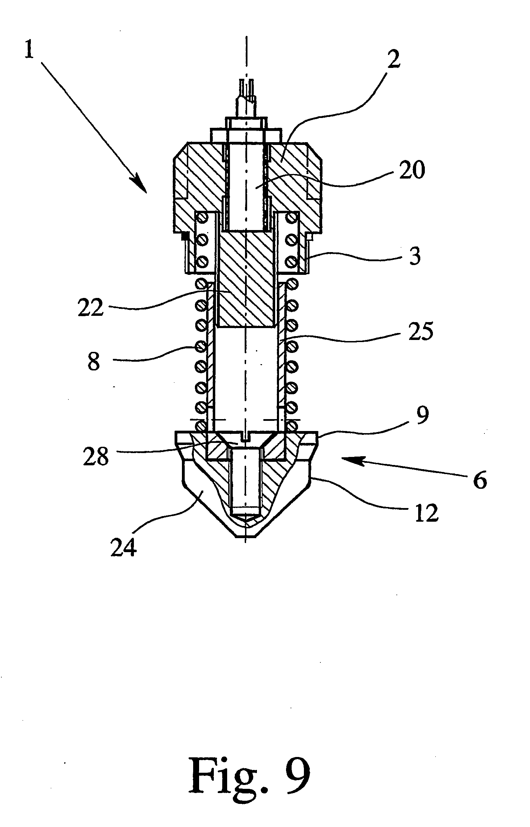

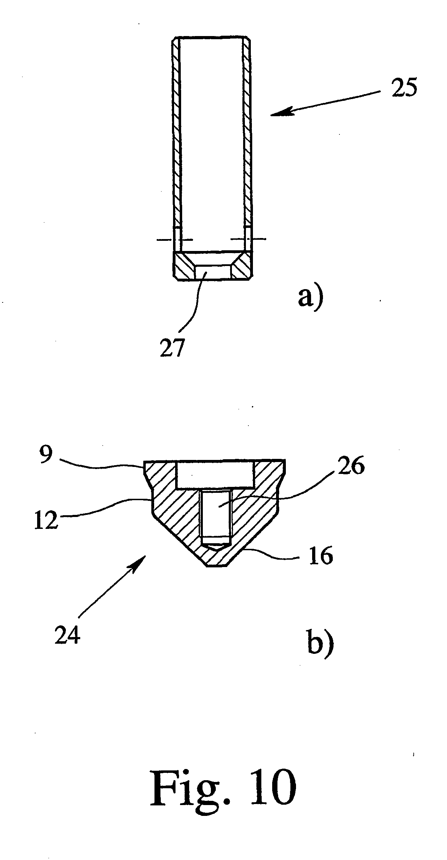

Zwischen dem - im eingebauten Zustand - in das Innere des Rohres 5 weisenden Ende des Hubkörpers 6 und dem umlaufenden Bund 9 bzw. dem Dichtungsring 11 weist der Hubkörper 6 bei den Ausführungsbeispielen gemäß den Figuren 1 bis 10, 12 bis 14, 17 und 18 einen zylindrischen Abschnitt 12 auf, der in den Ventilsitz 10 hineinragt, wenn keine Strömung 7 ansteht. Der Durchmesser des zylindrischen Abschnitts 12 ist dabei etwas kleiner als die Öffnung 13 des Ventilsitzes 10, so daß zwischen dem zylindrischen Abschnitt 12 und dem Ventilsitz 10 ein ringförmiger Spalt 14 vorhanden ist. Auf einen Dichtungsring 11 kann dann verzichtet werden, wenn - gemäß der Ausführung in Fig. 9 und 10 - der Übergang zwischen dem zylindrischen Abschnitt 12 und dem umlaufenden Bund 9 konisch ausgebildet ist.

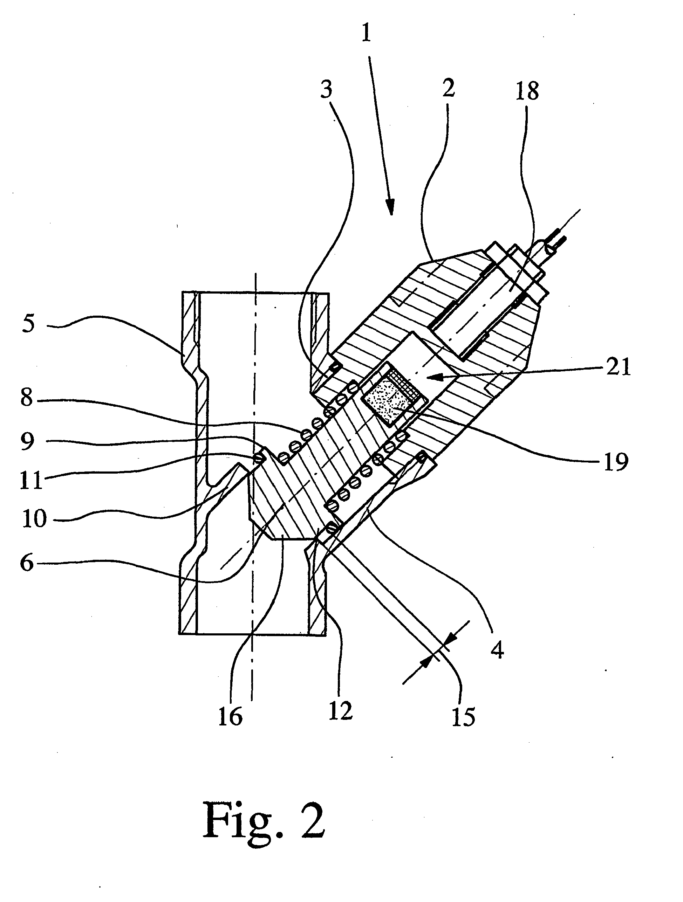

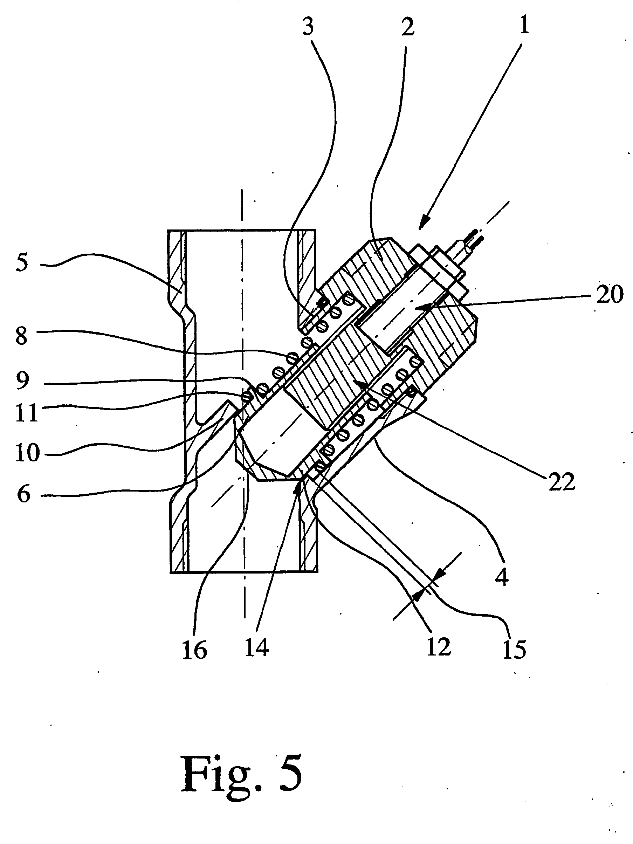

Ist keine Strömung 7 vorhanden, was in den Fig. 1, 4 und 7 dargestellt ist, so wird der Hubkörper 6 aufgrund der Federkraft des Federelements 8 gegen den Ventilsitz 10 gedrückt, wobei der ringförmige Spalt 14 durch den Dichtungsring 11 verschlossen ist. Beim Anstehen einer geringen Strömung 7, wie dies in den Fig. 2 und 5 dargestellt ist, wird der Hubkörper 6 durch die Strömung 7 entgegen der Federkraft des Federelements 8 zum Gehäuse 2 gedrückt. Das strömende Medium kann dann durch den Spalt 14 in der vorgegebenen Richtung durch das Rohr 5 strömen. Hierbei wird durch die Ausbildung des in den Ventilsitz 10 hineinragenden zylindrischen Abschnitts 12 erreicht, daß auch bei einer relativ geringen Strömung 7 der dadurch verursachte Hub 15 des Hubkörpers 6 ausreichend groß ist; so daß er von dem in dem Strömungssensor 1 angeordneten Sensorelement detektiert werden kann. Durch eine entsprechende Wahl der Länge des zylindrischen Abschnitts 12, des Spaltes 14 sowie eine entsprechende Dimensionierung des Federelements 8 kann dabei der bei einer bestimmten Strömung 7 auftretende Hub 15 eingestellt werden. Durch eine entsprechende Einstellung des Hubes 15 bei einer bestimmten Strömung 7 ist somit eine Anpassung an die Eigenschaften des verwendeten Näherungsschalters, insbesondere an den Schaltpunkt des Näherungsschalters, möglich.

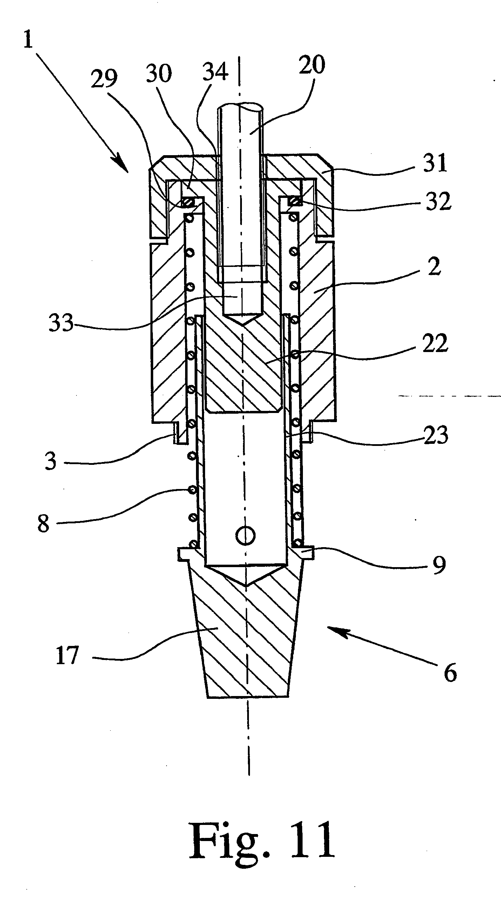

Wie aus den Figuren unmittelbar ersichtlich, weist das in das Innere des Rohres 5 weisende Ende des Hubkörpers 6 eine konisch zulaufende Spitze 16 oder eine kegelstumpfförmige Spitze 17 (Fig. 11) auf. Durch die Wahl der Spitze 16, 17 kann dabei ebenfalls eine Einstellung des Hubes 15 und damit auch des Schaltpunktes des Sensorelements erfolgen. Die Spitze 16 des Hubkörpers 6 kann dabei auch - was hier nicht dargestellt ist - die Form eines schiefen Kegelstumpfes aufweisen, so daß der Konus nicht symmetrisch zur Mittelachse des Hubkörpers 6 ausgebildet ist. Dadurch kann erreicht werden, daß der Spalt 14 proportional zum Hub 15 wächst.

Wie den Fig. 3 und 6 entnommen werden kann, ist der Hubkörper 6 so dimensioniert, daß bei maximaler Strömung 7 die Öffnung 13 nahezu vollständig freigegeben ist, so daß der Durchfluß des strömenden Mediums nahezu ungehindert erfolgen kann. Darüber hinaus kann den Figuren entnommen werden, daß beim Auftreten einer Strömung entgegen der in den Fig. 3 und 6 eingezeichneten Richtung der Strömungssensor 1 als Rückschlagventil fungiert. Durch die Federkraft des Federelements 8 wird der Hubkörper 6 mit seinem Bund 9 bzw. dem Dichtungsring 11 gegen den Ventilsitz 10 gedrückt, so daß kein Medium in entgegengesetzter Richtung - bei der Darstellung gemäß den Figuren von oben - durch das Rohr 5 fließen kann.

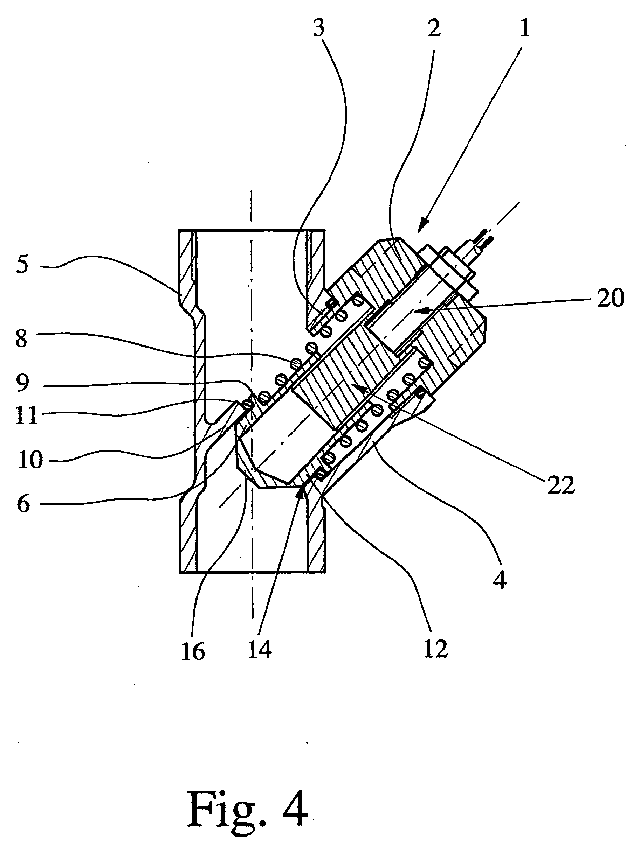

Die Ausführungsformen des Strömungssensors 1 gemäß den Fig. 1 bis 3, 7, 12 bis 14 und 16 bis 18 einerseits sowie gemäß den Fig. 4 bis 6, 8 bis 11. und 15 andererseits, unterscheiden sich durch die Verwendung unterschiedlicher Näherungsschalter. Bei den Ausführungsbeispielen gemäß den Fig. 1 bis 3, 7, 12 bis 14 und 16 bis 18 ist als Sensorelement ein magnetischer Näherungsschalter 18 vorgesehen, der in einer entsprechenden Bohrung im Gehäuse 2 eingeschraubt ist. Zur Betätigung des magnetischen Näherungsschalters 18 ist in dem gegenüberliegenden Ende des Hubkörpers 6 ein Permanentmagnet 19 angeordnet. Bei den Ausführungsformen des Strömungssensors 1 gemäß den Fig. 4 bis 6, 8 bis 11 und 15 ist als Sensorelement ein induktiver Näherungsschalter 20 vorgesehen, der ebenfalls in einer entsprechenden Bohrung in dem Gehäuse 2 befestigt ist.

Der Permanentmagnet 19 ist dabei in einer im Hubkörper 6 ausgebildeten Bohrung eingesetzt, die mittels eines Deckels dicht verschlossen, insbesondere verschweißt oder verlötet sein kann. Dies hat den Vorteil, daß der Permanentmagnet 19 nicht mit dem Medium in Berührung kommt, so daß es auch bei aggressiven Medien nicht zu einer Beschädigung oder einer Verschmutzung des Permanentmagnets 19 kommen kann. Außerdem können dadurch die Bauteile und die Materialien, die mit dem Medium in Berührung kommen reduziert werden. Insbesondere können dabei der Hubkörper 6 und der Deckel aus demselben Material, beispielsweise aus Edelstahl oder aus Kunststoff, sein.

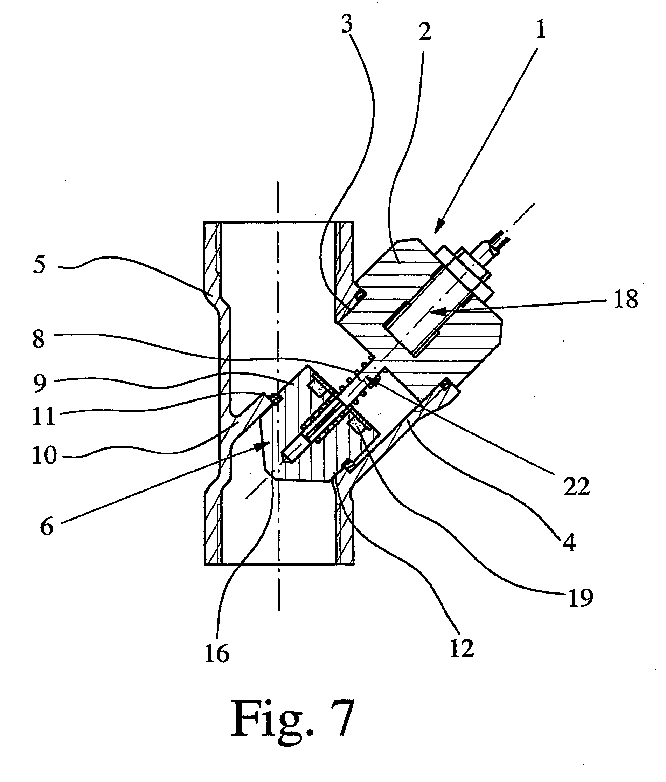

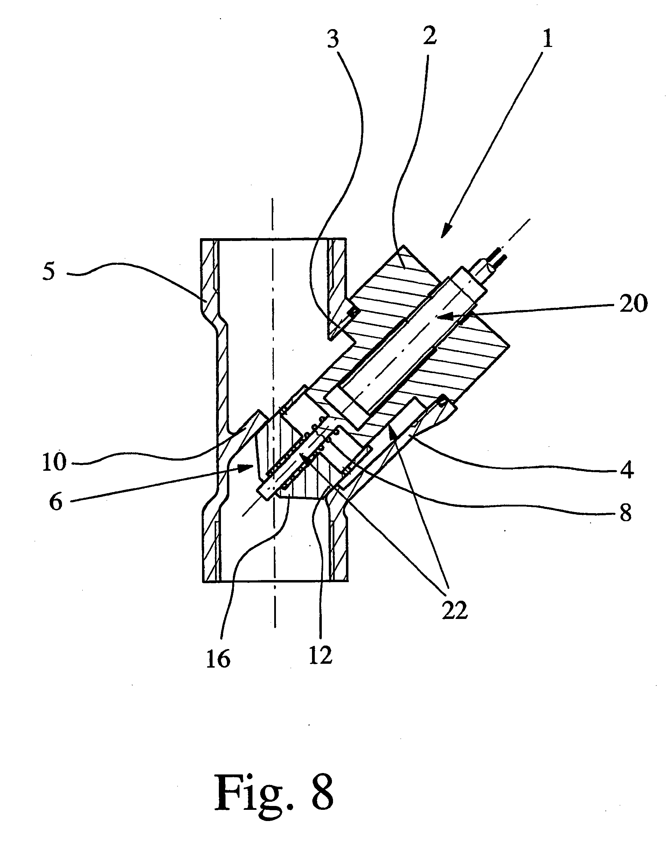

Bei dem in den Fig. 1 bis 3 und 16 dargestellten Strömungssensor 1 ist in dem Gehäuse 2 - im zum Hubkörper 6 weisenden Ende - eine Bohrung 21 ausgebildet, in der das einen entsprechenden Außendurchmesser aufweisende zylindrische Ende des Hubkörpers 6 geführt ist. Im Unterschied dazu ist bei den in den Fig. 4 bis 15, 17 und 18 dargestellten Strömungssensoren 1 das zum Hubkörper 6 weisende Ende des Gehäuses 2 als Führungsbolzen 22 ausgebildet, auf dem der Hubkörper 6 geführt ist. Hierzu ist der Hubkörper 6 gemäß den Fig. 4 bis 6, 8 bis 15, 17 und 18 hülsenförmig ausgebildet. Bei dem Strömungssensor 1 gemäß Fig. 7, bei dem das Gehäuse 2 ebenfalls einen Führungsbolzen 22 aufweist, ist in dem Hubkörper 6 eine korrespondierende Bohrung vorgesehen. Eine derartige Bohrung ist auch bei dem Hubkörper 6 des Strömungssensors 1 gemäß Fig. 8 ausgebildet, wobei hier der Führungsbolzen 22 am Gehäuse 2 zwei, einen unterschiedlichen Durchmesser aufweisende Abschnitte aufweist.

In den Fig. 9 und 10 ist eine weitere Ausgestaltung eines einen induktiven Näherungsschalter 20 aufweisenden Strömungssensors 1 dargestellt, bei dem der Hubkörper 6 zweiteilig ausgebildet ist. Der Hubkörper 6 weist einen - im eingebauten Zustand - in das Innere des Rohres 5 weisenden ersten Teil 24 und einen - im eingebauten Zustand - aus dem Inneren des Rohres 5 weisenden zweiten Teil 25 auf, der hülsenförmig ausgebildet ist. Die Verbindung der beiden Teile 24, 25 miteinander ist dadurch realisiert, daß in dem ersten Teil 24 des Hubkörpers 6 ein Sackloch 26 mit einem Innengewinde und in dem zweiten Teil 25 des Hubkörpers 6 eine Durchgangsbohrung 27 ausgebildet ist. Mittels eine Schraube 28 können dann die beiden Teile 24, 25 sicher miteinander verbunden werden.

Bevorzugt bestehen die beiden Teile 24, 25 des Hubkörpers 6 aus verschiedenen Materialien; der erste Teil 24 beispielsweise aus einem Kunststoff, insbesondere aus POM (Polyoxymethylen), und der zweite Teil 25 aus einem Metall, insbesondere aus Edelstahl. Dies führt dann dazu, daß beim Einbau des Strömungssensors 1 in einen zumeist aus Messing bestehenden Anschlußstutzen 4, keine zwei Metallteile miteinander in Berührung kommen. An dem Ventilsitz 10 liegt dann der aus Kunststoff bestehende erste Teil 24 des Hubkörpers 6 an.

Den Fig. 9 und 10 kann schließlich noch entnommen werden, daß der Übergang zwischen dem zylindrischen Abschnitt 12 und dem umlaufenden Bund 9 des Hubkörpers 6 konisch ausgebildet ist. Bei einer derartigen Ausgestaltung des ersten Teils 24 des Hubkörpers 6 kann auf die Verwendung eines in den Fig. 1 bis 7 dargestellten O-Ringes 11 verzichtet werden.

Bei den Ausführungsformen des Strömungssensors 1 gemäß Fig. 11 ist als Sensorelement ein induktiver Näherungsschalter 20 vorgesehen, der ebenfalls in einer entsprechenden Bohrung im Gehäuse 2 befestigt ist. Dabei ist das zum Hubkörper 6 weisende Ende des Gehäuses 2 des Strömungssensors 1 als Führungsbolzen 22 ausgebildet, auf dem das dem Gehäuse 2 zugewandte hülsenförmige Ende 23 des Hubkörpers 6 geführt ist. Zur Gewährleistung der einwandfreien Funktion des induktiven Näherungsschalters 20 ist zumindest der Führungsbolzen 22 des Gehäuses 2 aus nicht metallischem Werkstoff ausgebildet, während der Hubkörper 6 aus metallischem Werkstoff besteht, so daß der Hubkörper 6 bei ausreichender Annäherung seines hülsenförmigen Endes 23 an den induktiven Näherungsschalter 20 einen Schaltvorgang auslöst. Der Schaltabstand, d. h. der Abstand des hülsenförmigen Endes 23 vom induktiven Näherungsschalter 20, bei dem dieser einen Schaltvorgang auslöst, beträgt beispielsweise 3 - 5 mm. Dabei bleibt der induktiven Näherungsschalter 20 solange bedämpft, wie er in das hülsenförmige Ende 23 des Hubkörpers 6 eintaucht. Dadurch ist auch bei einem relativ kleinen Schaltabstand ein großer Hub des Hubkörpers 6 von 20 mm oder mehr möglich, so daß bei einer entsprechend großen Strömung 7 der Hubkörper 6 so weit ausgelenkt werden kann, daß die Strömung 7 des Mediums nicht oder kaum beeinträchtigt wird.

Während bei dem Strömungssensor 1 gemäß Fig. 4 bis 6 das gesamte Gehäuse 2 - inklusive des Führungsbolzens 22 - aus Kunststoff besteht, sind bei dem Strömungssensor 1 gemäß Fig. 11 das Gehäuse 2 und der Führungsbolzen 22 zwei separate Bauteile. Dabei weist das aus Metall, insbesondere aus Edelstahl, bestehende Gehäuse 2 eine umlaufende Schulter 29 und der aus Kunststoff bestehende Führungsbolzen 22 einen korrespondierenden Bund 30 auf.

Die Befestigung des Führungsbolzens 22 in dem hülsenförmigen Gehäuse 2 erfolgt dabei mit Hilfe eines Deckels 31, der auf das Gehäuse 2 aufgeschraubt wird, wodurch der Bund 30 des Führungsbolzens 22 gegen die Schulter 29 des Gehäuses 2 gedrückt wird.

Zur Verhinderung einer mechanischen Beschädigung und zur sicheren Abdichtung ist zwischen der Schulter 29 des Gehäuses 2 und dem Bund 30 des Führungsbolzens 22 ein Dichtring 32 in einer entsprechend ausgebildeten Nut eingelegt. Der in einer Bohrung 33 im Führungsbolzen 22 angeordnete induktive Näherungsschalter 20 ist dadurch befestigt, daß im Deckel 31 eine Bohrung mit einem Innengewinde 34 ausgebildet ist, in die der induktive Näherungsschalter 20 eingeschraubt wird. Die in Fig. 11 dargestellte besondere Ausgestaltung des Strömungssensors 1, mit dem Gehäuse 2, dem separaten Führungsbolzen 22 und dem Deckel 31 ist auch bei sehr hohen Drücken bis zu mehreren 100 bar einsetzbar.

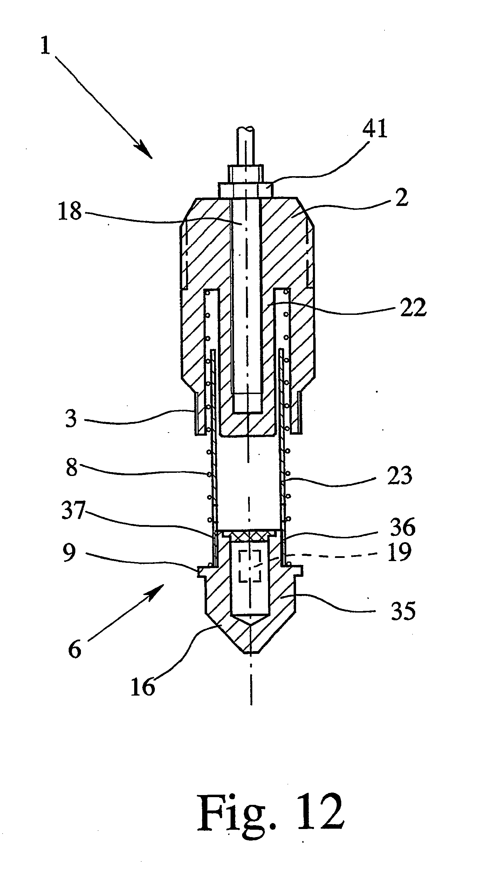

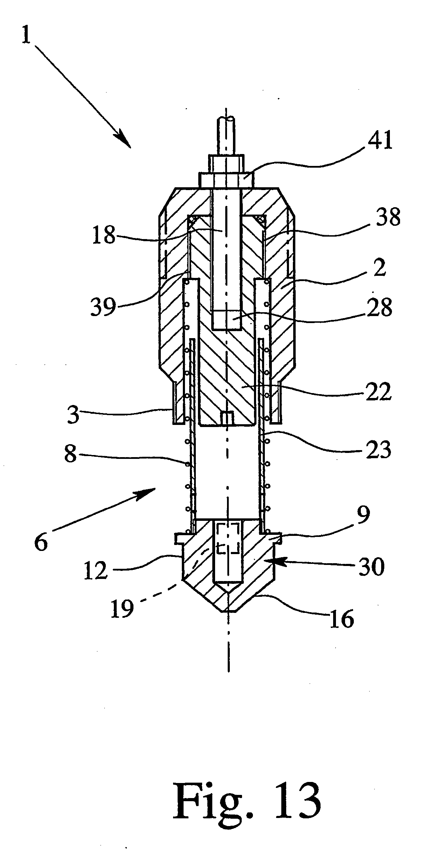

Bei den Ausführungsformen des Strömungssensors 1 gemäß den Fig. 12 und 13 ist als Sensorelement ein magnetische Näherungsschalter 18 vorgesehen, wobei jedoch im Unterschied zu den Ausführungsbeispielen gemäß den Figuren 1 bis 3 das zum Hubkörper 6 weisende Ende des Gehäuses 2 als Führungsbolzen 22 ausgebildet ist. Wie bei den Ausführungsbeispielen des Strömungssensors 1 gemäß den Figuren 4 bis 6 und 8 bis 11 ist das dem Gehäuse 2 zugewandte Ende 23 des Hubkörpers 6 hülsenförmige ausgeführt. Dabei ist der Permanentmagnet 19 nicht in dem dem Gehäuse 2 zugewandten hülsenförmigen Teil 23 sondern in dem dem Medium zugewandten Ende 35 des Hubkörpers 6 angeordnet. Dies hat den Vorteil, daß die Baulänge des Strömungssensors 1 deutlich reduziert ist, ohne den möglichen Hub zu verringern. Da der magnetische Näherungsschalter 18 einen großen Schaltabstand von 20 - 25 mm aufweist, wobei gleichzeitig eine hohe Schaltpunktgenauigkeit gegeben ist, können auch mit einem derartigen Strömungssensor 1 bereits sehr kleine Strömungen 7 detektiert werden. Durch den möglichen großen Hub 15 ist außerdem sichergestellt, daß bei großen Strömung 7 der Hubkörper 6 so weit ausgelenkt werden kann, daß die Strömung 7 des Mediums kaum beeinträchtigt wird. Schließlich ist bei dieser Ausführungsform auch eine große Länge des Federelements 8 realisierbar, so daß auch bei einem großen Hub 15 des Hubkörpers 6 die Federkraft relativ konstant bleibt. Auch hierdurch wird die Empfindlichkeit und Genauigkeit des Strömungssensors 1 weiter verbessert.

Der in den Figuren 12 und 13 dargestellte Hubkörper 6 ist zweiteilig aufgebaut, besteht nämlich aus dem hülsenförmigen Ende 23 (Rohr) und dem massiven Ende 35. Das Ende 35 weist dabei ein Außengewinde 36 und das hülsenförmige Ende 23 ein korrespondierendes Innengewinde 37 auf, so daß die beiden Teile des Hubkörpers 6 einfach miteinander verschraubt werden können. Dadurch ist eine große Variationsmöglichkeit gegeben, da ein und dasselbe hülsenförmigen Ende 23 mit unterschiedlich ausgebildeten massiven Enden 35 - mit konisch zulaufender Spitze 16 oder mit kegelstumpfförmiger Spitze 17 sowie mit oder ohne zylindrischem Abschnitt 12 - kombiniert werden kann.

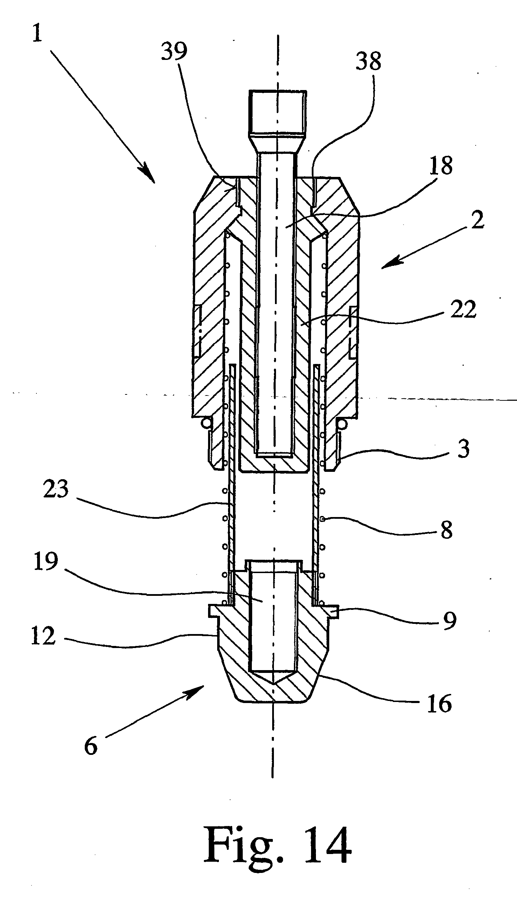

Bei dem Strömungssensor 1 gemäß den Fig. 13 und 14 sind das Gehäuse 2 und der Führungsbolzen 22 zwei separate Bauteile, wobei der Führungsbolzen 22 an seinem dem Hubkörper 6 abgewandten Ende ein Außengewinde 38 und das Gehäuse 2 ein korrespondierendes Innengwinde 39 aufweist, so daß der Führungsbolzen 22 in das Gehäuse 2 einschraubbar ist. Auch hierdurch läßt sich die Variationsmöglichkeit weiter erhöhen, da nun ein und dasselbe Gehäuse 2 mit unterschiedlichen Führungsbolzen 22 versehen werden kann. So kann der in Fig. 13 dargestellt Strömungssensor 1 auch mit einem induktiven Näherungsschalter 20 betrieben werden. In diesem Fall ist es lediglich erforderlich, daß der Führungsbolzen 22 aus Kunststoff und das hülsenförmige Ende 23 des Hubkörpers 6 aus Metall besteht.

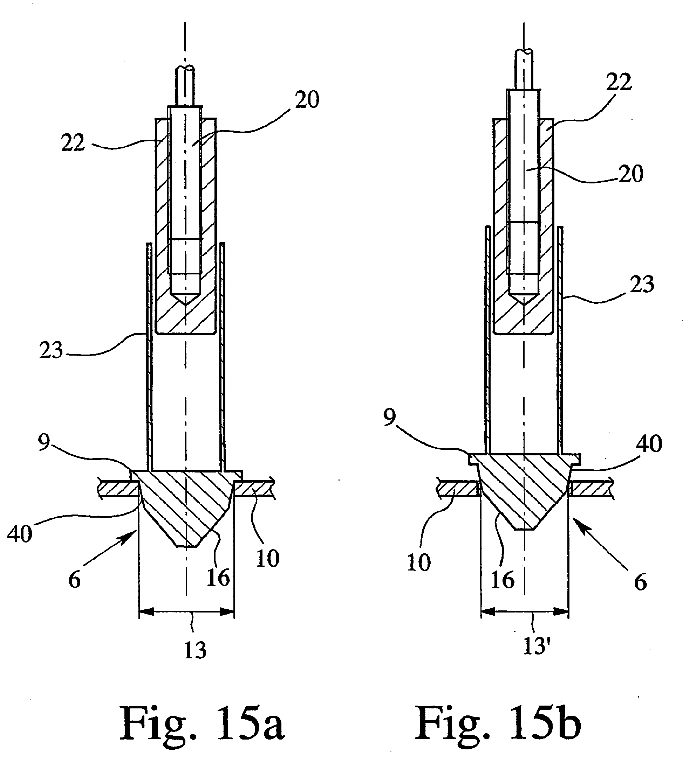

Die Fig. 15 zeigt zwei Darstellungen eines erfindungsgemäßen Strömungssensors 1, wobei hier zur Vereinfachung das Gehäuse 2 weggelassen worden ist. Der Strömungssensor 1 gemäß Fig. 15 unterscheidet sich von den in den übrigen Figuren, beispielsweise in den Fig. 12 bis 14 dargestellten Strömungssensoren 1 durch eine spezielle Ausgestaltung des Hubkörpers 6. Der in Fig. 15 dargestellte Hubkörper 6 weist nämlich anstelle eines zylindrischen Abschnitts 12 angrenzend an den umlaufenden Bund 9 einen Abschnitt 40 mit einer geringen Konizität von wenigen Grad auf. Der Neigungswinkel des Abschnitts 40 kann beispielsweise 5° bis 10° betragen, während der Neigungswinkel der konischen Spitze 16 ca. 45° beträgt.

Der Vorteil eines Abschnitts 40 mit geringer Konizität besteht darin, daß dadurch Toleranzen im Durchmesser der Öffnung 13 ausgeglichen werden können, ohne daß es dafür eines anderen Hubkörpers 6 mit einem anderen Durchmesser bedarf. Bei dem in Fig. 15a dargestellten Ausführungsbeispiel entspricht der Durchmesser der Öffnung 13 dem maximalen Durchmesser des Abschnitts 40 mit geringer Konizität, so daß der Hubkörper 6 mit der Unterkante des Bundes 9 auf dem Ventilsitz 10 aufliegt. Bei dem in Fig. 15b dargestellten Ausführungsbeispiel ist dagegen der Durchmesser der Öffnung 13' etwas geringer, so daß der Hubkörper 6 weniger weit in die Öffnung 13' eintaucht, als dies bei Fig. 15a der Fall ist

Idealerweise ist der Abschnitt 40 des Hubkörpers 6 so dimensioniert, daß der mittlere Durchmesser des Abschnitts 40 dem Soll-Durchmesser der Öffnung 13 entspricht. Je nach dem, ob der tatsächliche Durchmesser der Öffnung 13 größer oder kleiner als der Soll-Durchmesser ist, taucht der Hubkörper mit dem Abschnitt 40 dann mehr oder weniger weit in die Öffnung 13 ein. Durch eine entsprechende Wahl der Länge und des Neigungswinkels des Abschnitts 40 kann somit ein Hubkörper 6 zur Verfügung gestellt werden, der bei Öffnungen 13 mit einem bestimmten Durchmesserbereich eingesetzt werden kann. Die Gefahr einer Verklemmung des Hubkörpers 6 in der Öffnung 13 kann dadurch verringert werden, daß der massive Teil 35 des Hubkörpers 6 aus Kunststoff besteht.

Da sich bei der zuvor beschriebenen Variante des Hubkörpers 6 die Lage des Hubkörpers 6 in Abhängigkeit vom Durchmesser der Öffnung 13 verändert, verändert sich dadurch auch der Abstand zwischen dem induktiven Näherungsschalter 20 und dem den induktiven Näherungsschalter 20 beeinflussenden Ende des hülsenförmigen Teils 23 des Hubkörpers 6. Der Ausgangspunkt für eine Strömung "Null" ist somit abhängig vom Durchmesser der Öffnung 13. Daher ist eine Einstellung bzw. Justierung des induktiven Näherungsschalters 20 auf die Grundstellung des Hubkörpers 6, d.h. auf den Strömungsnullpunkt erforderlich. Aus diesem Grund ist der induktive Näherungsschalter 20 - und vorzugsweise auch der magnetische Näherungsschalter 18 - derart in dem Gehäuse 2 angeordnet, daß der Abstand des Näherungsschalters 18, 20 zum Hubkörper 6 einstellbar ist.

Dies kann im einfachsten Fall dadurch erfolgen, daß der Näherungsschalter 18, 20 ein Außengewinde aufweist und in der ein Innengewinde aufweisenden Bohrung 33 im Führungsbolzen 22 einschraubbar ist. Die Fixierung des Näherungsschalters 18, 20 kann dabei einfach mit Hilfe einer entsprechenden Mutter 41 erfolgen, wie dies beispielsweise in den Fig. 1 bis 7,12 und 13 dargestellt ist. Bei einem als Schalter ausgebildeten Strömungssensor 1, dessen Näherungsschalter 18, 20 einen bestimmten Schaltabstand aufweist, kann somit durch unterschiedlich weites Hereindrehen des Näherungsschalters 18, 20 in das Gehäuse 2 bzw. den Führungsbolzen 22 der für das Auslösen eines Schaltsignals erforderliche Hub 15 des Hubkörpers 6 eingestellt werden. Entsprechend kann bei einem analogen Strömungssensor 1 durch entsprechendes Hereindrehen des Näherungsschalters 18, 20 in das Gehäuse 2 bzw. den Führungsbolzen 22 der Strömungsnullpunkt eingestellt werden.

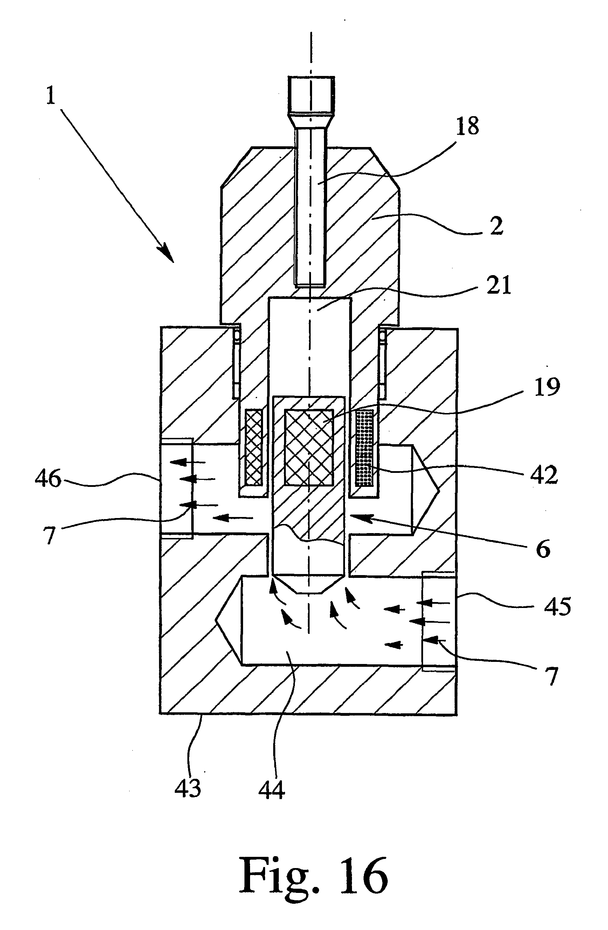

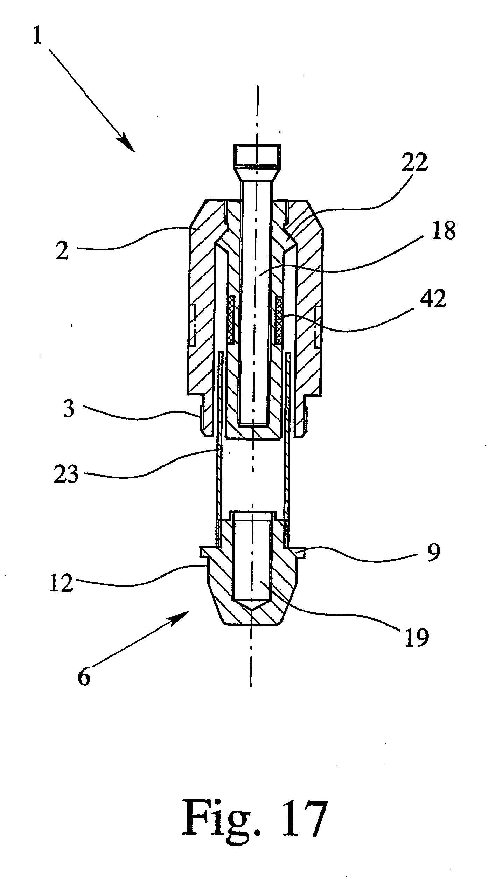

Die Fig. 16 und 17 zeigen zwei Ausführungsbeispiele eines erfindungsgemäßen Strömungssensors 1, bei dem als Rückstellelement zwischen dem Gehäuse 2 und dem Hubkörper 6 kein Federelement 8, d. h. kein mechanisches Rückstellelement, sondern ein magnetisches Rückstellelement vorgesehen ist. Bei dem in Fig. 16 dargestellten Ausführungsbeispiel wird das magnetische Rückstellelement dabei von dem in dem Hubkörper 6 angeordneten Permanentmagneten 19 und einem koaxial dazu im Gehäuse 2 angeordneten Ringmagneten 42 gebildet. Anstelle des Permanentmagneten 19 kann auch zusätzlicher Magnet in dem Hubkörper 6 angeordnet sein, der zusammen mit dem Ringmagneten 42 das magnetische Rückstellelement bildet. Ein elektromagnetisches Rückstellelement kann dadurch realisiert werden, daß anstelle des Ringmagneten 42 eine Spule in dem Gehäuse 2 angeordnet ist, die dann jedoch zur Erzeugung der Rückstellkraft von einem Strom durchflossen sein muß. Über den Strom ist dann auch die Größe der Rückstellkraft einstellbar.

Der in Fig. 17 dargestellte Strömungssensor 1 unterscheidet sich von dem Strömungssensor 1 gemäß Fig. 16 dadurch, daß dort der hülsenförmige Teil 23 des Hubkörpers 6 selber magnetisch ausgeführt ist. Bei Auftreten einer Strömung wird dann der hülsenförmige Teil 23 des Hubkörpers 6 über den im Gehäuse 2 angeordnete Ringmagnet 42 geschoben, so daß bei entsprechender Polarität von hülsenförmige Teil 23 und Ringmagnet 42 die Strömung den Hubkörper 6 gegen die magnetische Rückstellkraft bewegt.

Der Strömungssensor 1 gemäß Fig. 16 ist nicht in einem Anschlußstutzen 4 eines Rohres 5 sondern in ein separates Anschlußstück 43 eingeschraubt. In dem Anschlußstück 43 ist dabei ein Kanal 44 mit einem Einlaß 45 und einem Auslaß 46 für das strömende Medium ausgebildet. Der Einlaß 45 und der Auslaß 46 können auch in einer Ebene oder auf einer Seite ausgebildet sein, so daß der Kanal 44 dann im wesentlichen U-förmig verläuft. Die aus dem Strömungssensor 1 und dem Anschlußstück 43 bestehende Baueinheit ist einerseits relativ kompakt, andererseits jedoch auch bei relativ hohem Drücken von über 100 bar zuverlässig einsetzbar. Die Verwendung eines vorgefertigten Anschlußstücks 43 mit definierten Abmessungen, insbesondere bezüglich des Querschnitts des Kanals 44, ermöglicht darüber hinaus auf einfache Art und Weise eine Einstellung des Schaltpunkts bzw. des Nullpunkts des Strömungssensors 1.

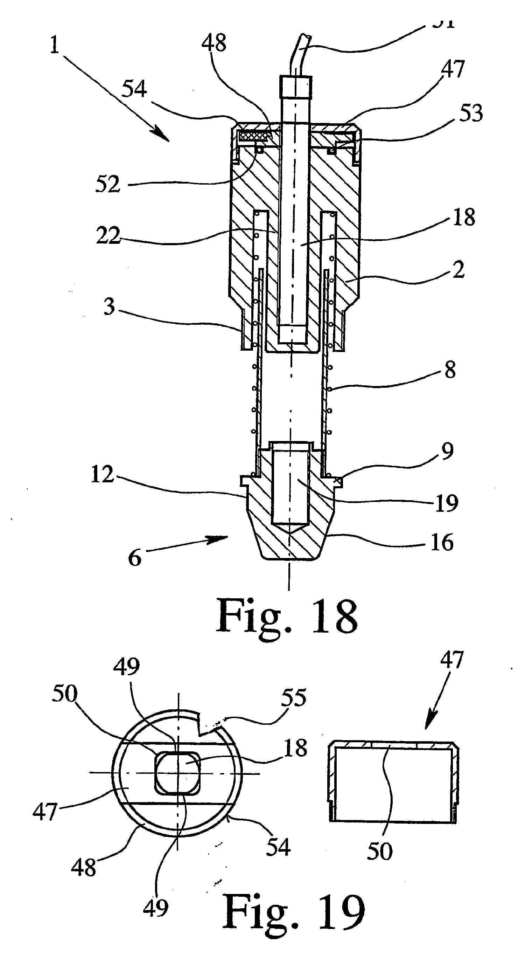

Fig. 18 zeigt einen Strömungssensor 1, welcher dem Strömungssensor 1 gemäß Fig. 12 ähnelt. Auch bei dem Strömungssensor 1, der in Fig. 18 dargestellt ist, ist der Abstand des magnetischen Näherungsschalters 18 zum Hubkörper 6 einstellbar. Dies geschieht hierbei jedoch nicht dadurch, daß der magnetische Näherungsschalter 18 direkt in den Führungsbolzen 22 des Gehäuses 2 eingeschraubt wird, sondern mit Hilfe eines speziellen Einstellmechanismusses, welcher nachfolgend auch im Zusammenhang mit Fig. 19 beschrieben wird.

Ähnlich dem Deckel 31 gemäß Fig. 11 ist an dem dem Hubkörper 6 abgewandten Ende des Gehäuses 2 ein Befestigungsbügel 47 aufgeschraubt, wobei zwischen dem stirnseitigen Ende des Gehäuses 2 und dem Befestigungsbügel 47 eine Verstellmutter 48 angeordnet ist. Der ein Außengewinde aufweisende Näherungsschalter 18 weist zwei einander gegenüberliegende abgeflachte Längsseiten 49 auf, so daß der Näherungsschalter 18 einen nicht kreisförmigen Querschnitt hat. In dem Befestigungsbügel 47 ist eine an den Querschnitt des Näherungsschalters 8 angepaßte Öffnung 50 ausgebildet, so daß der Näherungsschalter 18 nur bei entsprechender Ausrichtung der beiden abgeflachten Längsseiten 49 durch die Öffnung 50 im Befestigungsbügel 47 durchgesteckt werden kann. Die Verstellmutter 48 weist schließlich noch ein zum Außengewinde des Näherungsschalters 18 korrespondierendes Innengewinde auf, so daß durch Verdrehen der Verstellmutter 48 die axiale Position des Nährungsschalters 18 eingestellt werden kann, d. h. die Eintauchtiefe des Näherungsschalters 18 in den Führungsbolzen 22 und damit der Abstand des Näherungsschalters 18 zum Hubkörper 6 verändert werden kann.

Der Vorteil dieses aus dem Befestigungsbügel 47, der Verstellmutter 48 und dem mit abgeflachten Längsseiten versehenen Näherungsschalter 18 bestehenden Einstellmechanismusses besteht darin, daß beim Verdrehen der Verstellmutter 48 die axiale Position des Näherungsschalters 18 verändert wird, ohne daß sich der Näherungsschalter 18 selber um seine Längsachse mitdreht. Dieses Verhindern des Mitdrehens des Näherungsschalters 18 wird durch das Zusammenwirken der abgeflachten Längsseiten 49 mit der angepaßten Öffnung 50 im Befestigungsbügel 47 erreicht. Das ist insbesondere dann vorteilhaft, wenn der Näherungsschalter 18 über ein Anschlußkabel 51 bereits elektrisch angeschlossen ist, da dann ein Verdrehen des Anschlußkabels 51 verhindert wird.

Zur Verhinderung eines ungewollten Verdrehens der Verstellmutter 48 ist in der Stirnseite des Gehäuses 2 eine Nut 52 angeordnet, in die ein O-Ring 53 eingelegt ist, wobei die Verstellmutter 48 durch den Befestigungsbügel 47 leicht gegen den O-Ring 53 gedrückt wird. Der O-Ring 53 wirkt dadurch als "Bremse" für die Verstellmutter 48, ohne jedoch ein gewolltes Verdrehen der Verstellmutter 48 zu behindern. Zur einfachen Betätigung der Verstellmutter 48 kann diese darüber hinaus an ihrem Außenumfang noch eine Rändelung 54 aufweisen.

Durch den zuvor beschriebenen Einstellmechanismus kann somit der Abstand zwischen dem Näherungsschalter 18, 20 und dem Hubkörper 6 sehr komfortabel und genau eingestellt werden. Die axiale Position des Näherungsschalters 18, 20 im Gehäuse 2 kann dabei unmittelbar am aus dem Gehäuse 2 herausstehenden Ende des Näherungsschalters 18, 20 abgelesen werden. Hierzu ist vorzugsweise auf einer abgeflachten Längsseite 49 des Näherungsschalters 18 eine entsprechende Skalierung aufgebracht. Darüber hinaus kann auch die Verstellmutter 48 eine Markierung in Form einer Einkerbung 55 aufweisen, so daß auch der Verdrehwinkel der Verstellmutter 48 einfach ablesbar ist.

Anhand der in den Ausführungsbeispielen gezeigten unterschiedlichen Varianten des erfindungsgemäßen Strömungssensors 1 ist ersichtlich, daß der Strömungssensor 1 je nach Ausgestaltung für unterschiedliche Anwendungsfälle einsetzbar ist. Eine Anpassung an die unterschiedlichen Anwendungsfälle ist dabei durch die mögliche Modularität und den dadurch bedingten leichten Austausch einzelner Bauteile des Strömungssensors 1 einfach machbar. Insbesondere können die einzelnen Bauteile wie Gehäuse 2 und Hubkörper 6 zweiteilig ausgebildet sein, so daß für die einzelnen Bauteile an die jeweiligen Bedingungen angepaßte Materialen verwendet werden können. Dadurch ist der Strömungssensor 1 bei unterschiedlichen Medien, insbesondere auch bei aggressiven Medien einsetzbar.

In der einfachsten Ausführung wird der Strömungssensor 1 als binärer Strömungswächter eingesetzt, der wahlweise einen magnetischen Näherungsschalter 18 oder einen induktiven Näherungsschalter 20 aufweist. Die Einstellung des Schaltpunktes kann entweder bereits fertigungsseitig vorgegeben sein, oder durch entsprechend weites Einschrauben des Näherungsschalters 18, 20 in das Gehäuse 2 flexibel erfolgen. Ein derartiger Strömungswächter zeichnet sich durch eine sehr hohe Schaltgenauigkeit und eine sehr geringe Hysterese aus.

Daneben ist der erfindungsgemäße Strömungssensor 1 jedoch auch als sehr präziser Analogsensor, d. h. als Strömungsmeßgerät einsetzbar, wenn das Signal des Näherungsschalters 18, 20 in ein analoges Ausgangssignal umgewandelt wird. Hierbei wird ein Hubkörper mit einer konisch oder kegelstumpfförmig zulaufenden Spitze verwendet, wodurch das analoge Ausgangssignal des Näherungsschalters 18, 20 im wesentlichen linear proportional zur Strömung des zu überwachenden Mediums ist.

## Patentansprüche

1. Strömungssensor, für strömende Medien, mit einem zylindrischen Gehäuse (2) und mit einem in dem Gehäuse (2) angeordneten Sensorelement, wobei das Gehäuse (2) vorzugsweise ein Außengewinde (3) aufweist und in eine Wandung bzw. einen Anschlußstutzen (4) eines Rohres (5) oder in eine Öffnung eines Anschlußstückes (43) einschraubbar ist,
wobei ein in das strömende Medium hineinragender Hubkörper (6) vorgesehen ist, wobei der Hubkörper (6) an dem Gehäuse (2) beweglich geführt ist und in Abhängigkeit von der Strömung (7) des zu überwachenden Mediums gegen die Rückstellkraft eines zwischen dem Gehäuse (2) und dem Hubkörper (6) angeordneten Rückstellelements bewegbar ist,
wobei das Sensorelement als berührungsloser Näherungsschalter (18, 20) ausgebildet is und ein von der Position des Hubkörpers (6) abhängiges Signal erzeugt,
**dadurch gekennzeichnet, daß** das zum Hubkörper (6) weisende Ende des Gehäuses (2) einen Führungsbolzen (22) aufweist und zumindest das - im eingebauten Zustand - aus dem Inneren des Rohres (5) weisenden Ende des Hubkörpers (6) hülsenförmig ausgebildet ist, wobei der Innendurchmesser des hülsenförmige Teils (23) des Hubkörper (6) größer als der Außendurchmesser des Führungsbolzens (22) ist, so daß der Hubkörper (6) auf dem Führungsbolzens (22) geführt ist.

2. Strömungssensors nach Anspruch 1, **dadurch gekennzeichnet, daß** ein mechanisches Rückstellelement, insbesondere ein Federelement (8) zwischen dem Gehäuse (2) und dem Hubkörper (6) angeordnet ist.

3. Strömungssensor nach Anspruch 1, **dadurch gekennzeichnet, daß** ein magnetisches oder elektromagnetisches Rückstellelement vorgesehen ist, das von mindestens einem mit dem Hubkörper (6) verbundenen oder in dem Hubkörper (6) angeordneten Magneten (19) und von mindestens einem koaxial zum Magneten (19) des Hubkörpers (6) in dem Gehäuse (2) angeordneten Gegenmagneten (42) oder von einer koaxial zum Magneten (19) des Hubkörpers (6) in dem Gehäuse (2) angeordneten Spule gebildet wird, wobei vorzugsweise in dem Hubkörper (6) ein Stabmagnet (19) und in dem Gehäuse (2) mindestens ein Ringmagnet (42) angeordnet ist.

4. Strömungssensor nach einem der Ansprüche 1 bis 3, **dadurch gekennzeichnet, daß** der Hubkörper (6) einen umlaufenden Bund (9) aufweist, wobei der Bund (9) so ausgebildet ist, daß das Strömungssensor (1) zusätzlich die Funktion eines Rückschlagventils aufweist und wobei vorzugsweise zwischen dem - im eingebauten Zustand - in das Innere des Rohres (5) weisenden Ende des Hubkörpers (6) und dem umlaufenden Bund (9) ein zylindrischer Abschnitt (12) am Hubkörper (6) ausgebildet ist.

5. Strömungssensor nach einem der Ansprüche 1 bis 4, **dadurch gekennzeichnet, daß** das - im eingebauten Zustand - in das strömende Medium hineinragende Ende des Hubkörpers (6) eine konisch zulaufende Spitze (16) oder eine kegelstumpfBfrmige Spitze (17) aufweist.

6. Strömungssensor nach einem der Ansprüche 1 bis 5, **dadurch gekennzeichnet, daß** der Hubkörper (6) einen Abschnitt (40) mit einer geringen Konizität von 0,5° bis 15° aufweist.

7. Strömungssensor nach einem der Ansprüche 1 bis 6, **dadurch gekennzeichnet, daß** das Sensorelement ein magnetischer Näherungsschalter (18), insbesondere eine GMR-Zelle ist, und daß im Hubkörper (6) ein, bei einem vorgegebenen Abstand den magnetischen Nährungsschalter (18) betätigender Permanentmagnet (19) angeordnet ist, wobei der Permanentmagnet (19) vorzugsweise in einer im Hubkörper (6) angeordneten Bohrung eingesetzt ist und die Bohrung mit einem Deckel dicht verschlossen ist.

8. Strömungssensor nach einem der Ansprüche 1 bis 6, **dadurch gekennzeichnet, daß** das Sensorelement ein induktiver Näherungsschalter (20), insbesondere ein nichtbündig einbaubarer induktiver Näherungsschalter (20) ist.

9. Strömungssensors nach Anspruch 8, **dadurch gekennzeichnet, daß** der Sensorkopf des induktiven Näherungsschalter (20) neben einer Spule einen Schalenkern, insbesondere aus Ferrit aufweist, in dem die Spule eingelegt ist.

10. Strömungssensor nach Anspruch 8, **dadurch gekennzeichnet, daß** der Sensorkopf des induktiven Näherungsschalter (20) eine Luftspule aufweist, wobei in der Luftspule vorzugsweise ein stabförmiger Ferrit- oder Eisenkern angeordnet ist.

11. Strömungssensor nach einem der Ansprüche 1 bis 10, **dadurch gekennzeichnet, daß** im zum Hubkörper (6) weisenden Ende des Gehäuses (2) eine Bohrung (21) ausgebildet ist und daß zumindest das - im eingebauten Zustand - aus dem Inneren des Rohres (5) weisenden Ende (18) des Hubkörpers (6) zylinderförmig ausgebildet ist, so daß der Hubkörper (6) in der Bohrung (21) geführt ist.

12. Strömungssensor mit einem induktiver Näherungsschalter (20) nach einem der Ansprüche 8 bis 10 und mit einem zumindest teilweise hülsenförmigen Hubkörper (6) nach Anspruch 12, **dadurch gekennzeichnet, daß** der hülsenförmige Teil (23) des Hubkörper (6) aus Metall, insbesondere aus Edelstahl besteht und somit als Betätigungselement für den induktiver Näherungsschalter (20) dient.

13. Strömungssensor mit einem induktiver Näherungsschalter (20) nach einem der Ansprüche 8 bis 10 und mit einem zumindest teilweise hülsenformigen Hubkörper (6) nach Anspruch 12, **dadurch gekennzeichnet, daß** der hülsenförmige Teil (23) des Hubkörper (6) aus Kunststoff, insbesondere aus POM (Polyoxymethylen) besteht, wobei in dem hülsenförmige Teil (23) des Hubkörper (6) mindestens ein Ring aus Metall, insbesondere aus Eisen oder Ferrit, angeordnet ist.

14. Strömungssensors nach einem der Ansprüche 1 bis 13, **dadurch gekennzeichnet, daß** der Hubkörper (6) zweiteilig ausgebildet ist, wobei vorzugsweise der - im eingebauten Zustand - in das Innere des Rohres (5) weisende erst Teil (24, 35) des Hubkörpers (6) und der - im eingebauten Zustand - aus dem Inneren des Rohres (5) weisende zweite Teil (23, 25) des Hubkörpers (6) aus verschiedenen Materialien bestehen.

15. Strömungssensor nach Anspruch 14, **dadurch gekennzeichnet, daß** der erste Teil (24) des Hubkörpers (6) ein Sackloch (26) mit einem Innengewinde und der zweite Teil (25) des Hubkörpers (6) eine Durchgangsbohrung (27) aufweist, und daß die beiden Teile (24, 25) des Hubkörpers (6) mittels einer Schraube (28) miteinander verbindbar sind.

16. Strömungssensor nach einem der Ansprüche 1 bis 10 und 12 bis 15, **dadurch gekennzeichnet, daß** das Gehäuse (2) und der Führungsbolzen (22) zwei separate Bauteile sind, wobei vorzugsweise das Gehäuse (2) eine umlaufende Schulter (29) und der Führungsbolzen (22) einen korrespondierenden Bund (30) aufweist, und der Führungsbolzen (22) dadurch in dem Gehäuse (2) befestigbar ist, daß der Bund (30) des Führungsbolzens (22) mittels eines auf das Gehäuse (2) aufschraubbaren Deckels (31) an der Schulter (29) des Gehäuses (4) festlegbar ist.

17. Strömungssensor nach Anspruch 16, **dadurch gekennzeichnet, daß** der Führungsbolzen (22) an seinem dem Hubkörper (6) abgewandten Ende ein Außengewinde (38) und das Gehäuse (2) ein korrespondierendes Innengwinde (39) aufweist, so daß der Führungsbolzen (22) in das Gehäuse (2) einschraubbar ist.

18. Strömungssensor nach einem der Ansprüche 1 bis 17, dadurch gekenntzeichnet, daß der Näherungsschalter (18, 20) derart in dem Gehäuse (2) angeordnet, vorzugsweise eingeschraubt ist, daß der Abstand des Näherungsschalters (18, 20) zum Hubkörper (6) einstellbar ist.

19. Strömungssensor nach Anspruch 18, **dadurch gekennzeichnet, daß** an dem dem Hubkörper (6) abgewandten Ende des Gehäuses (2) ein Befestigungsbügel (47) angeordnet ist, und daß zwischen dem Ende des Gehäuses (2) und dem Befestigungsbügel (47) eine Verstellmutter (48) angeordnet ist, wobei das Sensorelement ein Außengewinde und mindestens eine abgeflachte Längsseite (49) aufweist, in dem Befestigungsbügel (47) eine an den Querschnitt des Sensorelements angepaßte Öffnung (50) ausgebildet ist und die Verstellmutter (48) ein zum Außengewinde des Sensorelements korrespondierendes Innengewinde aufweist, so daß durch Verdrehen der Verstellmutter (48) die axiale Position des Sensorelements eingestellt werden kann, ohne daß sich das Sensorelement mitdreht.

20. Strömungssensor nach Anspruch 19, **dadurch gekennzeichnet, daß** in der Stirnseite des Gehäuses (2) eine Nut (52) angeordnet ist, in die ein O-Ring (53) gehalten ist, wobei die Verstellmutter (48) durch den Befestigungsbügel (47) leicht gegen den O-Ring (53) gedrückt wird.

21. Strömungssensor nach einem der Ansprüche 18 bis 20, **dadurch gekennzeichnet, daß** die Position des Näherungsschalters (18, 20) im Gehäuse (2) unmittelbar am aus dem Gehäuse (2) herausstehenden Ende des Näherungsschalters (18, 20) und/oder am Gehäuse (2) ablesbar ist.

22. Strömungssensor nach einem der Ansprüche 1 bis 21, **dadurch gekennzeichnet, daß** das Gehäuse (2) ein Außengewinde (3) aufweist, so daß das Gehäuse (2) in eine Wandung bzw. einen Anschlußstutzen eines Rohres, durch welches das Medium (3) strömt, einschraubbar ist.

23. Strömungssensor nach einem der Ansprüche 1 bis 22, **dadurch gekennzeichnet, daß** der Näherungsschalter ein von der Position des Hubkörpers (6) abhängiges analoges Signal abgibt, das in einer nachfolgenden Bearbeitungseinheit, insbesondere einem Mikroprozessor, in ein binäres, analoges oder digitales Ausgangssignal umgewandelt wird, und daß vorzugsweise ein Schwellwertschalter vorgesehen ist, der das analoge Signal des Näherungsschalters in ein binäres Ausgangssignal umwandelt.

24. Anordnung zur Strömungsüberwachung in einer Wasserversorgungsanlage in einem Ein- oder Mehrfamilienhaus, wobei die Wasserversorgungsanlage zumindest einen Kaltwasserzulauf, einen Brauchwasserspeicher und einen Warmwasserkreislauf mit einer Wannwasserleitung und mehrere Zapfstellen aufweist, und wobei im Kaltwasserzu1auf ein Ventilsitz (10) ausgebildet ist,
**dadurch gekennzeichnet, dass** die Anordnung einen Strömungssensor (1) mit einem umlaufenden Bund (9) nach einem der Ansprüche 4 bis 23 enthält, und
daß der Strömungssensor (1) im Kaltwasserzulauf anstelle eines Rückschlagventils angeordnet ist

25. Anordnung nach Anspruch 24, **dadurch gekennzeichnet, daß** zwischen dem - im eingebauten Zustand - in das Innere des Rohres (5) ragenden Ende des Hubkörpers (6) des Strömungssensors (1) und dem umlaufenden Bund (9) ein zylindrischer Abschnitt (12) am Hubkörper (6) ausgebildet ist, wobei der zylindrischer Abschnitt (12) in den Ventilsitz (10) hineinragt, wenn keine Strömung (7) ansteht und der Durchmesser des zylindrischen Abschnitts (12) etwas kleiner als die Öffnung (13) des Ventilsitzes (10) ist, so daß zwischen dem zylindrischer Abschnitt (12) und dem Ventilsitz (10) ein Spalt (14) vorhanden ist.

26. Anordnung nach Anspruch 24, **dadurch gekennzeichnet, daß** zwischen dem - im eingebauten Zustand - in das Innere des Rohres (5) ragenden Ende des Hubkörper (6) des Strönaungssensors (1) und dem umlaufenden Bund (9) ein Abschnitt (40) mit geringer Konizität am Hubkörper (6) ausgebildet ist, wobei der konische Abschnitt (40) in den Ventilsitz (10) hineinragt, wenn keine Strömung (7) ansteht und der mittlere Durchmesser des konischen Abschnitts (40) etwas kleiner als die Öffnung (13) des Ventilsitzes (10) ist, so daß zwischen dem zylindrischer Abschnitt (12) und dem Ventilsitz (10) ein Spalt (14) vorhanden ist.

27. Anordnung nach Anspruch 25 oder 26, **dadurch gekennzeichnet, daß** der Spalt (14) weniger als 1 mm, insbesondere zwischen 0,2 mm und 0,5 mm beträgt,

28. Anordnung nach einem der Ansprüche 24 bis 27, **dadurch gekennzeichnet, daß** der Winkel a zwischen der Längsachse des Hubkörpers (6) bzw. der Längsachse des Ventilsitzes (10) und der Längsachse des Kaltwasserzulaufs weniger als 60°, vorzugsweise ca. 45°, beträgt.

## Claims

1. Flow sensor, for flowing media, with a cylindrical housing (2) and with a sensor element arranged in the housing (2), wherein the housing (2) preferably has an external thread (3) and can be screwed into a wall or an adaptor (4) of a tube (5) or in an opening of a connection piece (43),
wherein a lifting body (6) protruding into the flowing medium is provided, wherein the lifting member (6) is movably guided on the housing (2) and, depending on the flow (7) of the medium to be monitored, is movable against the reset force of a reset element arranged between the housing (2) and the lifting member (6), and
wherein the sensor element is designed as a non-contact proximity switch (18, 20) and produces an signal dependent on the position of the lifting body (6),
**characterized in**
**that** the end of the housing (2) facing the lifting body (6) has a guide pin (22) and at least the end of the lifting body (6) facing out of the inside of the tube (5) - in the installed state - is sleeve-shaped, wherein the inner diameter of the sleeve-shaped part (23) of the lifting body (6) is greater than the outer diameter of the guide pin (22), so that the lifting body (6) is lead onto the guide pin (22).

2. Flow sensor according to claim 1, **characterized in that** a mechanical reset element, in particular a spring element (8) is arranged between the housing (2) and the lifting member (6).

3. Flow sensor according to claim 1, **characterized in that** a magnetic or electromagnetic reset element is provided, which is formed of at least one magnet (19) connected to the lifting body (6) or arranged in the lifting element (6) and of at least one opposing magnet (42), which is located coaxially in the housing relative to the magnet (19) of the lifting body (6) or of a coil arranged coaxially in the housing relative to the magnet (19) of the lifting body (6), wherein preferably a bar magnet (19) is arranged in the lifting body (6) and at least one ring magnet (42) is arranged in the housing (2).

4. Flow sensor according to any one of claims 1 to 3, **characterized in that** the lifting body (6) has a peripheral collar (9), wherein the collar (9) is formed so that the flow sensor (1) additionally has the function of a check valve and wherein preferably a cylindrical section (12) is formed on the lifting body (6) between - in the installed state - the end of the lifting body (6) facing the interior of the tube (5) and the circumferential collar (9).

5. Flow sensor according to any one of claims 1 to 4, **characterized in that** - in the installed state - the end of the lifting body (6) protruding into the flowing medium has a tapered tip (16) or a truncated cone-shaped tip (17).

6. Flow sensor according to any one of claims 1 to 5, **characterized in that** the lifiting body (6) has a section (40) with a conicity of 0.5 ° to 15°.

7. Flow sensor according to any one of claims 1 to 6, **characterized in that** the sensor element is a magnetic proximity switch (18), in particular a GMR cell, and that a permanent magnet (19) actuating the magnetic proximity switch (18) at a predetermined distance is arranged in the the lifting member (6), wherein the permanent magnet (19) is preferably inserted in a bore arranged in the lifting body (6) and the bore is sealed tight with a cover.

8. Flow sensor according to any one of claims 1 to 6, **characterized in that** the sensor element is an inductive proximity switch (20), particularly a non-embeddable inductive proximity switch (20).

9. Flow sensor according to claim 8, **characterized in that**, in addition to a coil, the sensor head of the inductive proximity switch (20) has a pot-type core, in particular of ferrite, in which the coil is inserted.

10. Flow sensor according to claim 8, **characterized in that** the sensor head of the inductive proximity switch (20) has an air-core coil, preferably a rod-shaped ferrite or iron core is arranged in the air-core coil.

11. Flow sensor according to one of claims 1 to 10, **characterized in that** a bore (21) is formed in the end of the housing (2) facing the lifting body (6) and that at least - in the installed state - the end (18) of the lifting body (6) facing out of the inside of the tube (5) is formed (6) cylindrical, so that the lifting body (6) is guided in the bore (21).

12. Flow sensor with an inductive proximity switch (20) according to any one of claims 8 to 10, and with an at least partially sleeve-shaped lifting body (6) according to claim 11, **characterized in that** the sleeve-shaped part (23) of the lifting body (6) consists of metal, especially stainless steel, and thus acts as an actuating element for the inductive proximity switch (20).

13. Flow sensor with an inductive proximity switch (20) according to any one of claims 8 to 10, and with an at least partially sleeve-shaped lifting body (6) according to claim 11, **characterized in that** the sleeve-shaped part (23) of the lifting body (6) consists of plastic, especially POM (polyoxymethylene), wherein at least one ring made of metal, in particular of iron or ferrite, is arranged in the sleeve-shaped part (23) of the lifting body (6).

14. Flow sensor according to any one of claims 1 to 13, **characterized in that** the lifting body (6) is formed in two parts, wherein, preferably, - in the installed state - the first part (24, 35) of the lifting body (6) facing the interior of the tube (5) and - in the installed state - the second part (23, 25) of the lifting body (6) facing out from the inside of the tube (5) consist of different materials.

15. Flow sensor according to claim 14, **characterized in that** the first part (24) of the lifting body (6) has a blind hole (26) with an internal thread and the second part (25) of the lifting body (6) has a through bore (27) and that the the two parts (24, 25) of the lifting body (6) can be connected to one another by means of a screw (28).

16. Flow sensor according to any one of claims 1 to 10 and 12 to 15, **characterized in that** the housing (2) and the guide pin (22) are two separate components, wherein preferably the housing (2) has a peripheral shoulder (29) and the guide pin (22) has a corresponding collar (30) and, thus, the guide pin (22) is attachable in the housing (2), that the collar (30) of the guide pin (22) is fixable on the shoulder (29) of the housing (4) by means of a cover (31) that is screwed onto the housing (2).

17. Flow sensor according to claim 16, **characterized in that** the guide pin (22) has an external thread (38) at its end facing away from the lifting body (6) and the housing (2) has a corresponding internal thread (39), so that the guide pin (22) can be screwed into the housing (2).

18. Flow sensor according to any one of claims 1 to 17, **characterized in that** the proximity switch (18, 20) is arranged, preferably screwed into the housing (2), so that the distance of the proximity switch (18, 20) to the lifting body (6) is adjustable.

19. Flow sensor according to claim 18, **characterized in that** a mounting bracket (47) is provided on the end of the housing (2) facing away from the lifting body (6) and that an adjusting nut (48) is provided between the end of the housing (2) and the mounting bracket (47), wherein the sensor element has an outside thread and at least one flattened lengthwise side (49), wherein an opening (50) matched to the cross section of the sensor element is formed in the mounting bracket (47) and wherein the adjustment nut (48) has an inside thread that corresponds to the outside thread of the sensor element, so that by twisting the adjustment nut (48), the axial position of the sensor element can be set without the sensor element turning at the same time.

20. Flow sensor according to claim 19, **characterized in that** a groove (52) is arranged in the end face of the housing (2), in which an O-ring is held (53), wherein the adjusting nut (48) is slightly pressed against the O-ring (53) by the mounting bracket (47).

21. Flow sensor according to any one of claims 18 to 20, **characterized in that** the position of the proximity switch (18, 20) in the housing (2) is directly readable on an end of the proximity switch (18, 20) protruding from the housing (2) and/or on the housing (2).

22. Flow sensor according to any one of claims 1 to 21, **characterized in that** the housing (2) has an external thread (3), so that the housing (2) can be screwed into a wall or an adaptor of a pipe, through which the medium (3) flows.

23. Flow sensor according to one of claims 1 to 22, **characterized in that** the proximity switch outputs an analog signal dependent on the position of the lifting body (6), which is converted into a binary, analog or digital output signal in a subsequent processing unit, in particular a microprocessor, and that preferably a threshold value switch is provided, which converts the analog signal of the proximity switch into a binary output signal.

24. Arrangement for monitoring flow in a water supply system in a single or multi-family house, wherein the water supply system has at least one cold water inlet, a water tank and a hot water cycle with a hot water pipe and several taps, and wherein a valve seat (10) is formed in the cold water inlet,
**characterized in**
**that** the arrangement comprises a flow sensor (1) with a peripheral collar (9) according to one of claims 4 to 23, and
**that** the flow sensor (1) is arranged in the cold water inlet instead of a check valve.

25. Arrangement according to claim 24, **characterized in that** a cylindrical section (12) is formed on the lifting body (6) between - in the installed state - the end of the lifting body (6) of the flow sensor (1) projecting into the interior of the tube (5) and the peripheral collar (9), wherein the cylindrical section (12) extends into the valve seat (10) when no flow (7) is applied and the diameter of the cylindrical section (12) is slightly smaller than the opening (13) of the valve seat (10) such that a gap (14) is present between the cylindrical section (12) and the valve seat (10).

26. Arrangement according to claim 24, **characterized in that** a section (40) with low conicity is formed on the lifting body (6) between - in the installed state - the end of the lifting body (6) of the flow sensor (1) projecting into the interior of the tube (5) and the peripheral collar (9), wherein the conical section (40) extends into the valve seat (10) when no flow (7) is present and the mean diameter of the conical section (40) is slightly smaller than the opening (13) of the valve seat (10), so that there is a gap (14) between the cylindrical section (12) and the valve seat (10).

27. Arrangement according to claim 25 or 26, **characterized in that** the gap (14) is less than 1 mm, in particular between 0.2 mm and 0.5 mm.

28. Arrangement according to one of claims 24 to 27, **characterized in that** the angle α between the longitudinal axis of the lifting body (6) or the longitudinal axis of the valve seat (10) and the longitudinal axis of the cold water inlet is less than 60°, preferably about 45°.

## Revendications

1. Capteur de débit, pour des milieux s'écoulant, comprenant un boîtier cylindrique (2) et un élément de capteur disposé dans le boîtier (2), le boîtier (2) présentant de préférence un filetage extérieur (3) et pouvant être vissé dans une paroi ou une tubulure de raccordement (4) d'un tube (5) ou dans une ouverture d'une pièce de raccordement (43),
un corps de levage (6) pénétrant dans le milieu s'écoulant étant prévu, le corps de levage (6) étant guidé de manière déplaçable au niveau du boîtier (2) et pouvant être déplacé en fonction du débit (7) du milieu à surveiller à l'encontre de la force de rappel d'un élément de rappel disposé entre le boîtier (2) et le corps de levage (6),
l'élément de capteur étant réalisé sous forme de commutateur de proximité sans contact (18, 20) et produisant un signal dépendant de la position du corps de levage (6),
**caractérisé en ce**
**que** l'extrémité du boîtier (2) tournée vers le corps de levage (6) présente un boulon de guidage (22) et au moins l'extrémité du corps de levage (6) tournée - dans l'état monté - hors de l'intérieur du tube (5) est réalisée en forme de douille, le diamètre intérieur de la partie en forme de douille (23) du corps de levage (6) étant supérieur au diamètre extérieur du boulon de guidage (22), de sorte que le corps de levage (6) soit guidé sur le boulon de guidage (22).

2. Capteur de débit selon la revendication 1, **caractérisé en ce qu'**un élément de rappel mécanique, notamment un élément de ressort (8), est disposé entre le boîtier (2) et le corps de levage (6).

3. Capteur de débit selon la revendication 1, **caractérisé en ce qu'**un élément de rappel magnétique ou électromagnétique est prévu, lequel est formé par au moins un aimant (19) connecté au corps de levage (6) ou disposé dans le corps de levage (6) et par au moins un aimant conjugué (42) disposé coaxialement à l'aimant (19) du corps de levage (6) dans le boîtier (2) ou par une bobine disposée coaxialement à l'aimant (19) du corps de levage (6) dans le boîtier (2), un barreau aimanté (19) étant disposé de préférence dans le corps de levage (6) et au moins un aimant annulaire (42) étant disposé dans le boîtier (2).

4. Capteur de débit selon l'une quelconque des revendications 1 à 3, **caractérisé en ce que** le corps de levage (6) présente un épaulement périphérique (9), l'épaulement (9) étant réalisé de telle sorte que le capteur de débit (1) présente en outre la fonction d'un clapet anti-retour et dans lequel de préférence une portion cylindrique (12) est réalisée sur le corps de levage (6) entre l'extrémité du corps de levage (6) tournée - dans l'état monté - dans l'intérieur du tube (5), et l'épaulement périphérique (9).

5. Capteur de débit selon l'une quelconque des revendications 1 à 4, **caractérisé en ce que** l'extrémité du corps de levage (6) pénétrant - dans l'état monté - dans le milieu s'écoulant, présente une pointe (16) se terminant coniquement ou une pointe (17) de forme tronconique.

6. Capteur de débit selon l'une quelconque des revendications 1 à 5, **caractérisé en ce que** le corps de levage (6) présente une portion (40) ayant une faible conicité de 0,5° à 15°.

7. Capteur de débit selon l'une quelconque des revendications 1 à 6, **caractérisé en ce que** l'élément de capteur est un commutateur de proximité magnétique (18), notamment une cellule GMR et **en ce qu'**un aimant permanent (19) actionnant le commutateur de proximité magnétique (18) à une distance prédéfinie, est disposé dans le corps de levage (6), l'aimant permanent (19) étant inséré de préférence dans un alésage pratiqué dans le corps de levage (6) et l'alésage étant fermé hermétiquement par un couvercle.

8. Capteur de débit selon l'une quelconque des revendications 1 à 6, **caractérisé en ce que** l'élément de capteur est un commutateur de proximité inductif (20), notamment un commutateur de proximité inductif (20) pouvant être monté de manière non encastrable.

9. Capteur de débit selon la revendication 8, **caractérisé en ce que** la tête de capteur du commutateur de proximité inductif (20) présente, en plus d'une bobine, un noyau coquille, notamment en ferrite, dans lequel est introduite la bobine.

10. Capteur de débit selon la revendication 8, **caractérisé en ce que** la tête de capteur du commutateur de proximité inductif (20) présente une bobine à air, un noyau en ferrite ou en fer de préférence en forme de barreau étant disposé dans la bobine à air.

11. Capteur de débit selon l'une quelconque des revendications 1 à 10, **caractérisé en ce que** dans l'extrémité du boîtier (2) tournée vers le corps de levage (6) est réalisé un alésage (21) et **en ce qu'**au moins l'extrémité (18) du corps de levage (6) tournée - dans l'état monté - hors de l'intérieur du tube (5), est réalisée sous forme cylindrique, de telle sorte que le corps de levage (6) soit guidé dans l'alésage (21).

12. Capteur de débit comprenant un commutateur de proximité inductif (20) selon l'une quelconque des revendications 8 à 10, et comprenant un corps de levage (6) au moins en partie en forme de douille selon la revendication 11, **caractérisé en ce que** la partie en forme de douille (23) du corps de levage (6) se compose de métal, en particulier d'acier noble, et sert ainsi d'élément d'actionnement pour le commutateur de proximité inductif (20).

13. Capteur de débit comprenant un commutateur de proximité inductif (20) selon l'une quelconque des revendications 8 à 10, et comprenant un corps de levage (6) au moins en partie en forme de douille selon la revendication 11, **caractérisé en ce que** la partie en forme de douille (23) du corps de levage (6) se compose de plastique, notamment de POM (polyoxyméthylène), au moins une bague en métal, notamment en fer ou en ferrite, étant disposée dans la partie en forme de douille (23) du corps de levage (6).

14. Capteur de débit selon l'une quelconque des revendications 1 à 13, **caractérisé en ce que** le corps de levage (6) est réalisé en deux parties, la première partie (24, 35) du corps de levage (6) tournée - dans l'état monté - vers l'intérieur du tube (5) et la deuxième partie (23, 25) du corps de levage (6) tournée - dans l'état monté - hors de l'intérieur du tube (5) se composant de préférence de matériaux différents.

15. Capteur de débit selon la revendication 14, **caractérisé en ce que** la première partie (24) du corps de levage (6) présente un trou borgne (26) avec un filetage interne et la deuxième partie (25) du corps de levage (6) présente un alésage traversant (27), et **en ce que** les deux parties (24, 25) du corps de levage (6) peuvent être connectées l'une à l'autre au moyen d'une vis (28).

16. Capteur de débit selon l'une quelconque des revendications 1 à 10 et 12 à 15, **caractérisé en ce que** le boîtier (2) et le boulon de guidage (22) sont deux composants séparés, de préférence le boîtier (2) présentant un épaulement périphérique (29) et le boulon de guidage (22) présentant un épaulement correspondant (30), et le boulon de guidage (22) pouvant être fixé dans le boîtier (2) par le fait que l'épaulement (30) du boulon de guidage (22) peut être fixé à l'épaulement (29) du boîtier (2) au moyen d'un couvercle (31) pouvant être vissé sur le boîtier (2).

17. Capteur de débit selon la revendication 16, **caractérisé en ce que** le boulon de guidage (22) présente à son extrémité opposée au corps de levage (6) un filetage extérieur (38) et le boîtier (2) présente un filetage intérieur correspondant (39), de telle sorte que le boulon de guidage (22) puisse être vissé dans le boîtier (2),

18. Capteur de débit selon l'une quelconque des revendications 1 à 17, **caractérisé en ce que** le commutateur de proximité (18, 20) est disposé dans le boîtier (2), de préférence par vissage, de telle sorte que la distance du commutateur de proximité (18, 20) au corps de levage (6) puisse être ajustée.

19. Capteur de débit selon la revendication 18, **caractérisé en ce que** sur l'extrémité du boîtier (2) opposée au corps de levage (6) est disposé un étrier de fixation (47) et **en ce qu'**entre l'extrémité du boîtier (2) et l'étrier de fixation (47) est disposé un écrou de réglage (48), l'élément de capteur présentant un filetage extérieur et au moins un côté longitudinal aplati (49), une ouverture (50) adaptée à la section transversale de l'élément de capteur étant réalisée dans l'étrier de fixation (47) et l'écrou de réglage (48) présentant un filetage interne correspondant au filetage externe de l'élément de capteur, de telle sorte que par rotation de l'écrou de réglage (48), la position axiale de l'élément de capteur puisse être ajustée, sans que l'élément de capteur ne tourne en même temps.

20. Capteur de débit selon la revendication 19, **caractérisé en ce qu'**une rainure (52) est pratiquée dans le côté frontal du boîtier (2), dans laquelle est retenu un joint torique (53), l'écrou de réglage (48) étant pressé légèrement par l'étrier de fixation (47) contre le joint torique (53).

21. Capteur de débit selon l'une quelconque des revendications 18 à 20, **caractérisé en ce que** la position du commutateur de proximité (18, 20) dans le boîtier (2) peut être lue directement sur l'extrémité du commutateur de proximité (18, 20) faisant saillie hors du boîtier (2) et/ou sur le boîtier (2).

22. Capteur de débit selon l'une quelconque des revendications 1 à 21, **caractérisé en ce que** le boîtier (2) présente un filetage extérieur (3) de telle sorte que le boîtier (2) puisse être vissé dans une paroi ou une tubulure de raccordement d'un tube à travers lequel s'écoule le milieu (3).

23. Capteur de débit selon l'une quelconque des revendications 1 à 22, **caractérisé en ce que** le commutateur de proximité délivre un signal analogique dépendant de la position du corps de levage (6), qui est converti dans une unité de traitement subséquente, en particulier un microprocesseur, en un signal de sortie binaire, analogique ou numérique, et **en ce que** de préférence un commutateur de valeur seuil est prévu, lequel convertit le signal analogique du commutateur de proximité en un signal de sortie binaire.

24. Agencement de surveillance du débit dans une installation d'alimentation en eau dans un bâtiment logeant une ou plusieurs familles, l'installation d'alimentation en eau présentant au moins une amenée d'eau froide, un accumulateur d'eau de traitement et un circuit d'eau chaude, avec une conduite d'eau chaude et plusieurs points de prélèvement, et dans lequel un siège de soupape (10) est réalisé dans l'amenée d'eau froide,
**caractérisé en ce que**
l'agencement contient un capteur de débit (1) comprenant un épaulement périphérique (9) selon l'une quelconque des revendications 4 à 23, et
**en ce que** le capteur de débit (1) est disposé dans l'amenée d'eau froide au lieu d'un clapet anti-retour,

25. Agencement selon la revendication 24, **caractérisé en ce qu'**entre l'extrémité du corps de levage (6) du capteur de débit (1) faisant saillie - dans l'état monté - à l'intérieur du tube (5) et l'épaulement périphérique (9) est réalisée une portion cylindrique (12) sur le corps de levage (6), la portion cylindrique (12) pénétrant dans le siège de soupape (10) lorsqu'aucun débit (7) n'est présent, et le diamètre de la portion cylindrique (12) étant un peu plus petit que l'ouverture (13) du siège de soupape (10), de telle sorte qu'une fente (14) existe entre la portion cylindrique (12) et le siège de soupape (10).

26. Agencement selon la revendication 24, **caractérisé en ce qu'**entre l'extrémité du corps de levage (6) du capteur de débit (1) faisant saillie - dans l'état monté - à l'intérieur du tube (5) et l'épaulement périphérique (9) est réalisée une portion (40) de conicité réduite sur le corps de levage (6), la portion conique (40) pénétrant dans le siège de soupape (10) lorsqu'il n'y a pas de débit (7), et le moyenne diamètre de la portion conique (40) étant un peu plus petit que l'ouverture (13) du siège de soupape (10), de telle sorte qu'une fente (14) existe entre la portion cylindrique (12) et le siège de soupape (10).

27. Agencement selon la revendication 25 ou 26, **caractérisé en ce que** la fente (14) est inférieure à 1 mm, notamment est comprise entre 0,2 mm et 0,5 mm.

28. Agencement selon l'une quelconque des revendications 24 à 27, **caractérisé en ce que** l'angle α entre l'axe longitudinal du corps de levage (6) ou l'axe longitudinal du siège de soupape (10) et l'axe longitudinal de l'amenée d'eau froide est inférieur à 60°, de préférence est d'environ 45
